# EUROPEAN PATENT APPLICATION

(11) **EP 4 503 585 A1**
(43) Date of publication of application: **05.02.2025**
(21) Application number: 23845468.0
(22) Date of filing: 21.07.2023
(51) Int. Cl.: H04M 1/725, G06F 3/04817, G06F 9/451

(54) **INFORMATION RECOMMENDATION METHOD AND ELECTRONIC DEVICE**

(30) Priority: 26.07.2022 CN 202210883338
(71) Applicant: Huawei Technologies Co., Ltd., Shenzhen, Guangdong 518129 (CN)
(72) Inventor: ZHANG, Yanan, Shenzhen, Guangdong 518129 (CN); WANG, Hongjun, Shenzhen, Guangdong 518129 (CN); CUI, Weifeng, Shenzhen, Guangdong 518129 (CN)
(74) Representative: Grünecker Patent- und Rechtsanwälte PartG mbB
(86) International application number: PCT/CN2023/108723
(87) International publication number: WO 2024/022258

(57) **Abstract**

An information recommendation method and an electronic device are provided. The method includes: An electronic device obtains first information, where the first information includes at least one of a current geographical location, a current running application, a current posture, and current display information of the electronic device; and displays a sidebar on a display of the electronic device, where the sidebar includes second information related to the first information. In this manner, the electronic device may flexibly display the sidebar based on a current actual situation, to improve operation experience of a user on the electronic device.

## Description

### CROSS-REFERENCE TO RELATED APPLICATIONS

This application claims priority to Chinese Patent Application No. 202210883338.0, filed with the China National Intellectual Property Administration on July 26, 2022 and entitled "INFORMATION RECOMMENDATION METHOD AND ELECTRONIC DEVICE", which is incorporated herein by reference in its entirety.

### TECHNICAL FIELD

This application relates to the field of electronic technologies, and in particular, to an information recommendation method and an electronic device.

### BACKGROUND

As terminal technologies advance, electronic devices such as mobile phones and tablet computers have become indispensable devices in people's daily life and office work. In addition, as more functions in the electronic device emerge, in a process of operating the electronic device, a user inevitably needs to search, from a plurality of functions, for a function that currently needs to be used, and the operation is not convenient enough. In addition, for a group of people who know less about electronic products, such as the elderly and teenagers, it is difficult to search for a corresponding function from the plurality of functions of the electronic device, and experience is poor.

### SUMMARY

An objective of this application is to provide an information recommendation method and an electronic device, to improve operation experience of a user on the electronic device.

According to a first aspect, an information recommendation method is provided, and is applied to an electronic device. The electronic device may be a mobile phone, a tablet computer, or the like. This is not limited in embodiments of this application. The method includes: obtaining first information, where the first information includes at least one of a current geographical location, a current running application, a current posture, and current display information of the electronic device; and displays a sidebar on a display of the electronic device, where the sidebar includes second information related to the first information.

In other words, the electronic device may determine recommended information (namely, the second information) in the sidebar based on the current geographical location, that is, when the current geographical location changes, information in the sidebar may change. Alternatively, recommended information in the sidebar may be determined based on the current running application, that is, when the current running application changes, information in the sidebar may change. Alternatively, recommended information in the sidebar may be determined based on the current posture. For example, the electronic device is a foldable device, and information in the sidebar is different in different postures. Alternatively, recommended information in the sidebar may be determined based on the current display information, that is, when the current display information changes, information in the sidebar changes. It is clear that, according to the information recommendation method provided in this embodiment of this application, appropriate information may be recommended to a user, to reduce a possibility that the user searches for a function that currently needs to be used from a plurality of functions, provide a convenient operation entry for the user, reduce operation steps of the user, and improve operation experience of the user. In addition, in this application, the electronic device may determine the recommended information in the sidebar based on a plurality of types of information. In other words, accuracy of the determined recommended information is high. This further improves experience.

It should be noted that, that the information in the sidebar changes may be that some information changes, or may be that all the information changes.

In a possible design, when the first information includes the current geographical location, the second information includes: an icon of at least one of a function that is used at the geographical location, a function that is used at a frequency greater than a preset frequency at the geographical location, a function that is commonly used at the geographical location, and a function that is set by the user set by a system by default for use at the geographical location.

In other words, when the electronic device is located at a geographical location, the second information related to the geographical location (for example, an icon of a function frequently used at the location or an icon of a function commonly used at the location) may be displayed in the sidebar. In this way, when arriving at a location, the user can quickly find a function that needs to be used at the location. This saves an operation, and improves user experience.

For example, the function includes at least one of an application, a service, a tool, or a multi-application combination. The multi-application combination may include split-screen display of applications, floating display of an application, and the like.

In a possible design, when the first information includes the current running application, the second information is related to an application type of the current running application. For example, if the current running application is a video playing application, for example, Huawei video, the recommended information includes services such as video effect enhancement, sound effect enhancement, AI subtitling, visual shopping, and song listening and recognition. For another example, if the current running application is an audio playing application, for example, Huawei music, the recommended information includes services such as headset connection and sound effect enhancement. Therefore, when the electronic device runs different applications, functions included in the sidebar are different. In other words, when a current application of the electronic device changes, the function in the sidebar also changes. In this manner, the electronic device may recommend, to the user, a function suitable for the current running application, to facilitate a user operation.

In a possible design, the method further includes: when there are a plurality of current running applications, the second information is related to an application type of a target application in the plurality of applications, and the target application is determined from the plurality of applications based on a priority relationship. The priority relationship includes: A priority of a foreground application is higher than a priority of a background application, or a priority of a full-screen application is higher than a priority of a non-full-screen application, and the priority of the non-full-screen application is higher than a priority of a background application. In other words, when a plurality of applications are run, the second information related to the type of the target application is displayed in the sidebar, and the target application is determined based on a priority. That is, in this manner, after determining the target application with a high priority, the electronic device may recommend a function suitable for the target application to the user, to facilitate a user operation.

In a possible design, when the first information includes the current posture, and the current posture is a support state, the second information includes at least one screen splitting icon. The screen splitting icon indicates two applications to be displayed in split screen, and a screen splitting manner indicated by the screen splitting icon is related to a folding direction of the electronic device. The support state is a state of the electronic device between a folded state and an unfolded state.

It should be understood that the folded state is 0 degrees, the unfolded state is 180 degrees, and the support state may be understood as a state between 0 degrees in the folded state and 180 degrees in the unfolded state of the display. Generally, when a folding angle of a foldable screen is within a range greater than 0 degrees and less than 180 degrees, the screen is divided into two parts, and the user may want to process different applications in split screen. Therefore, the electronic device may display the screen splitting icon, so that the user quickly controls the electronic device to enter screen splitting. This saves a user operation, and improves efficiency.

In a possible design, that a screen splitting manner indicated by the screen splitting icon is related to a folding direction of the electronic device includes: when a folding manner is up-down folding, the screen splitting icon indicates up-down screen splitting of the two applications; and when the folding direction is left-right folding, the screen splitting icon indicates left-right screen splitting of the two applications.

It may be understood that, generally, when the electronic device is left-right folded, the foldable screen is divided into a left display area and a right display area. In this case, the electronic device displays an icon for left-right screen splitting, for the user to quickly enter a left-right split-screen mode. Similarly, when the electronic device is up-down folded, the foldable screen is divided into an upper display area and a lower display area. In this case, the electronic device displays an icon for up-down screen splitting, for the user to quickly enter an up-down split-screen mode. In conclusion, in this manner, the electronic device can quickly enter a split-screen mode that adapts to a current folding direction, and an operation is fast and convenient.

In a possible design, the screen splitting icon indicates a first application and a second application to be displayed in split screen. The first application is an application displayed in a foreground when the electronic device is in the unfolded state, and the second application is another application different from the first application. The another application includes at least one of an application that is frequently used by the user with the first application in split screen, an application that is set by the user for use with the first application in split screen, an application that is set by the system by default for use with the first application in split screen, and an application that is switched with the first application a quantity of times greater than a preset quantity of times.

For example, when the electronic device is in the unfolded state, the application A is displayed in the foreground. In this case, when the electronic device enters the support state from the unfolded state, the displayed screen splitting icon may be a screen splitting icon for the application A and another application. In other words, when the electronic device switches from the unfolded state to the support state, an application (namely, the application A) that is originally run in the foreground in the unfolded state continues to be run in the foreground, and another application is opened at the same time. In addition, the another application is an application related to the application A (for example, an application that is often used with the application A in split screen). This further facilitates a user operation.

In a possible design, when the first information includes the current display information, the second information is related to content and/or a layout status of the current display information. That is, when content of a current display interface changes or the layout status changes, the recommended information in the sidebar may change accordingly, to adapt to the current display information in real time.

In a possible design, that the second information is related to a layout status of the current display information includes: When the layout status is a to-be-split-screen state in which screen splitting is to be performed with a third application, the second information includes at least one screen splitting icon, and the screen splitting icon indicates another application and the third application to be displayed in split screen; or when the layout status is a split-screen state in which screen splitting is performed on a fourth application and a fifth application, the second information includes at least one screen splitting icon, and the screen splitting icon indicates another application and the fourth application to be displayed in split screen, and/or another application and the fifth application to be displayed in split screen.

That is, when the electronic device is in the to-be-split-screen state or the split-screen state, the screen splitting icon may be displayed in the sidebar.

The to-be-split-screen state is used as an example. It is assumed that the electronic device is in the to-be-split-screen state in which screen splitting is to be performed with a third application. The screen splitting icon in the sidebar may be the screen splitting icon for the third application and the another application, for the user to quickly enable a split-screen mode of the third application and the another application. In addition, the another application may be an application related to the third application (for example, at least one of an application that is frequently used by the user with the third application in split screen, an application that is set by the user for use with the third application in split screen, an application that is set by the system by default for use with the third application in split screen, and an application that is switched with the third application a quantity of times greater than a preset quantity of times).

The split-screen state is used as an example. It is assumed that the fourth application and the fifth application are in the split-screen state. The screen splitting icon in the sidebar may be the screen splitting icon for the another application and the fourth application, or the screen splitting icon for the another application and the fifth application. The screen splitting icon for the another application and the fourth application is used as an example. The another application may be an application related to the fourth application (for example, at least one of an application that is frequently used by the user with the third application in split screen, an application that is set by the user for use with the third application in split screen, an application that is set by the system by default for use with the third application in split screen, and an application that is switched with the third application a quantity of times of greater than a preset quantity of times).

In a possible design, the sidebar includes at least one of the following: an application icon, a service icon, a tool icon, a screen splitting icon, a floating and full-screen display icon, and a floating and split-screen display icon. Therefore, in embodiments of this application, icons displayed in the sidebar are diversified, various functions can be enabled, and an operation is flexible and convenient.

In a possible design, before the obtaining first information, the method further includes: displaying a first interface, where the sidebar is displayed on an upper layer of the first interface in a floating manner, or is displayed with the first interface in split screen. That is, when the sidebar appears, the sidebar may be displayed in the floating manner, or may be displayed in split screen with a current interface to avoid blocking the current interface (namely, the first interface). Display of the sidebar is flexible.

In a possible design, before the displaying a sidebar on a display of the electronic device, the method further includes: receiving a swipe operation from a side edge of the display to an inner side of the display, and calling out the sidebar; and displaying a first icon, and displaying the sidebar when an operation for the first icon is received. That is, the sidebar may be called out by an operation of the user, that is, called out when required by the user, and does not block the display as much as possible. In this way, experience is good.

In a possible design, the receiving a swipe operation from a side edge of the display to an inner side of the display, and calling out the sidebar includes: receiving a first swipe operation from the side edge of the display to the inner side of the display, and calling out a first sidebar, where a width of the first sidebar is a first width; and receiving an operation for widening the first sidebar, and adjusting the first sidebar to be a second sidebar, where a width of the second sidebar is a second width, and the second width is greater than the first width. The operation for widening the first sidebar includes: a second swipe operation from the side edge of the display to the inner side of the display or a swipe operation from a side edge of the first sidebar to the inner side of the display. That is, a width of the sidebar may be adjusted. In this way, the user may reduce or widen the sidebar based on an actual situation. For example, when the sidebar is wide and blocks the current interface much, the width of the sidebar may be reduced, or when the sidebar is narrow and it is inconvenient to find an icon, the sidebar may be widened to quickly find the icon. In conclusion, a design manner of the sidebar is flexible, and different requirements of the user are met as much as possible.

In a possible design, the adjusting the first sidebar to a second sidebar includes: performing at least one of the following operations to obtain the second sidebar: adjusting a sorting manner of icons in the first sidebar; increasing a quantity of icons in the first sidebar; adding a first display area to the first sidebar, and displaying, in the first display area, an interface obtained after a sixth application in the first sidebar is opened; and adding a second display area to the first sidebar; and displaying icons of different processing procedures of a function in the first sidebar in the second display area. That is, when the sidebar is adjusted, the icon in the sidebar may change. For example, the sorting manner changes, an icon is added, or a function corresponding to an icon is enabled. This design is flexible and facilitates a user operation.

In a possible design, the method further includes: receiving a swipe operation from the inner side of the display to the side edge of the display, and hiding the sidebar. That is, the sidebar may be hidden by an operation of the user, to avoid not blocking the display. In this way, experience is good.

In a possible design, the first icon is an icon of a function that is most frequently used by the user and that is determined by the electronic device based on at least one of the current geographical location, the current running application, the current posture, and the current display information. That is, after determining, based on at least one of the current geographical location, the current running application, the current posture, and the current display information, the function that is most frequently used by the user, the electronic device may first display the icon of the function. In this way, the display may be block as little as possible. If the user wants to open the sidebar, the user may tap the icon to open the sidebar.

In a possible design, the sidebar includes at least one icon, and the method further includes: when an operation for a second icon in the sidebar is received, performing at least one of the following operations: displaying, in full screen, an application interface corresponding to the second icon; entering a split-screen mode, where in the split-screen mode, a first area and a second area are included, a current interface is displayed in the first area, and the application interface corresponding to the second icon is displayed in the second area; and displaying, on an upper layer of the current interface in a floating manner, the application interface corresponding to the second icon. That is, when the user taps an icon in the sidebar, an application interface corresponding to the icon may be displayed in the floating manner, or an application interface corresponding to the icon may be displayed in split screen, or the like. In conclusion, the application corresponding to the icon can be quickly opened. This facilitates a user operation.

In a possible design, when the second icon is an icon of Al touch, after the entering a split-screen mode, the method further includes: receiving a selection operation of selecting a target object from the first area; and displaying a recognition result of the target object in the second area in response to the selection operation. In this manner, when the electronic device is in the split-screen mode, the user may select an object in the first area, and display, in the second area, a recognition result of the object selected by the user. In this way, an operation is convenient, and user experience is good.

In a possible design, the sidebar includes a first display area and a second display area, the first display area includes the second information, and the second display area includes user-defined information. That is, the sidebar may include two parts (the first display area and the second display area). One part is the recommended information, and the other part is the user-defined information. This facilitates a user operation.

In a possible design, the first display area and the second display area are spaced by using a dividing line or a spacing, and the method further includes: receiving an adjustment operation for the dividing line or the spacing; and adjusting display sizes of the first display area and the second display area in response to the adjustment operation. That is, the sidebar may include two parts (the first display area and the second display area). One part is the recommended information, the other part is the user-defined information, and display sizes of the two parts may be adjusted based on a user requirement. This facilitates a user operation.

According to a second aspect, an electronic device is further provided. The electronic device includes:
a processor, a memory, and one or more programs.

The one or more programs are stored in the memory. The one or more programs include instructions. When the instructions are executed by the processor, the electronic device is enabled to perform the steps of the method according to the first aspect.

According to a third aspect, a computer-readable storage medium is further provided. The computer-readable storage medium is configured to store a computer program. When the computer program is run on a computer, the computer is enabled to perform the method according to the first aspect.

According to a fourth aspect, a computer program product is further provided, including a computer program, where when the computer program is run on a computer, the computer is enabled to perform the steps of the method according to the first aspect.

According to a fifth aspect, an embodiment of this application further provides a chip. The chip is coupled to a memory in an electronic device, and is configured to invoke a computer program stored in the memory and perform the technical solutions according to the first aspect of embodiments of this application. In embodiments of this application, "coupling" means that two components are directly or indirectly combined with each other.

For beneficial effect of the second aspect to the fifth aspect, refer to beneficial effect of the first aspect. Details are not described again.

### BRIEF DESCRIPTION OF DRAWINGS

FIG. 1 is a diagram of a sidebar according to an embodiment of this application;
FIG. 2 is a diagram of a hardware structure of an electronic device according to an embodiment of this application;
FIG. 3 is a diagram of a sidebar and icons in the sidebar according to an embodiment of this application;
FIG. 4A(a) to FIG. 4B(c) are diagrams of a sidebar according to an embodiment of this application;
FIG. 5A(a) to FIG. 5C(c) are other diagrams of a sidebar according to an embodiment of this application;
FIG. 6 is still another diagram of a sidebar according to an embodiment of this application;
FIG. 7 is still another diagram of a sidebar according to an embodiment of this application;
FIG. 8A and FIG. 8B are diagrams of a call-out manner of a sidebar according to an embodiment of this application;
FIG. 9(a) to FIG. 9(f) are diagrams of widening a sidebar according to an embodiment of this application;
FIG. 10A(a) to FIG. 10C are diagrams of pinning a sidebar according to an embodiment of this application;
FIG. 11A to FIG. 11C(d) are diagrams of multi-module display of a sidebar according to an embodiment of this application;
FIG. 12A(a) to FIG. 12B are diagrams of a change of icons in a sidebar according to an embodiment of this application;
FIG. 13A to FIG. 13G(c) are diagrams of opening an application by using a sidebar according to an embodiment of this application;
FIG. 14 is a diagram of another call-out manner of a sidebar according to an embodiment of this application;
FIG. 15 is a schematic flowchart of an information recommendation method according to an embodiment of this application;
FIG. 16 is another schematic flowchart of an information recommendation method according to an embodiment of this application;
FIG. 17 is still another schematic flowchart of an information recommendation method according to an embodiment of this application; and
FIG. 18 is a diagram of a structure of an electronic device according to an embodiment of this application.

### DESCRIPTION OF EMBODIMENTS

The following describes some terms in embodiments of this application, to facilitate understanding of a person skilled in the art.

In embodiments of this application, "at least one" means one or more, and "a plurality of" means two or more. In addition, it should be understood that in descriptions of this specification, words such as "first" and "second" are merely intended for purposes of description, and should not be understood as expressing or implying relative importance or a sequence. For example, a first device and a second device do not represent an importance degree of the first device and the second device or represent a sequence of the first device and the second device, and are merely used for distinguishing and description. The term "and/or" in embodiments of this application describes only an association relationship and represents that three relationships may exist. For example, A and/or B may represent the following three cases: Only A exists, both A and B exist, and only B exists. In addition, the character "/" in this specification usually indicates an "or" relationship between the associated objects.

The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application.

Reference to "an embodiment", "in some examples", "some embodiments", or the like described in this specification means that one or more embodiments of this specification include a specific feature, structure, or characteristic described with reference to the embodiment. Therefore, statements such as "in some examples", "in an embodiment", "in some embodiments", "in some other embodiments", and "in other embodiments" that appear at different places in this specification do not necessarily mean referring to a same embodiment, instead, the statements mean "one or more but not all of embodiments", unless otherwise specifically emphasized. The terms "include", "contain", "have", and their variants all mean "include but are not limited to", unless otherwise specifically emphasized in another manner.

An information recommendation method provided in embodiments of this application is applicable to an electronic device. For example, the electronic device may be a convenient electronic device like a mobile phone, a tablet computer, or a notebook computer, or may be a wearable device like a watch or a band, or may be a smart home device like a television or a refrigerator, or may be a vehicle-mounted device or the like, or may be a virtual reality (Virtual Reality, VR) device, an augmented reality (Augmented Reality, AR) device, or a mixed reality (Mixed Reality, MR) technology device. In conclusion, a specific type of the electronic device is not limited in embodiments of this application.

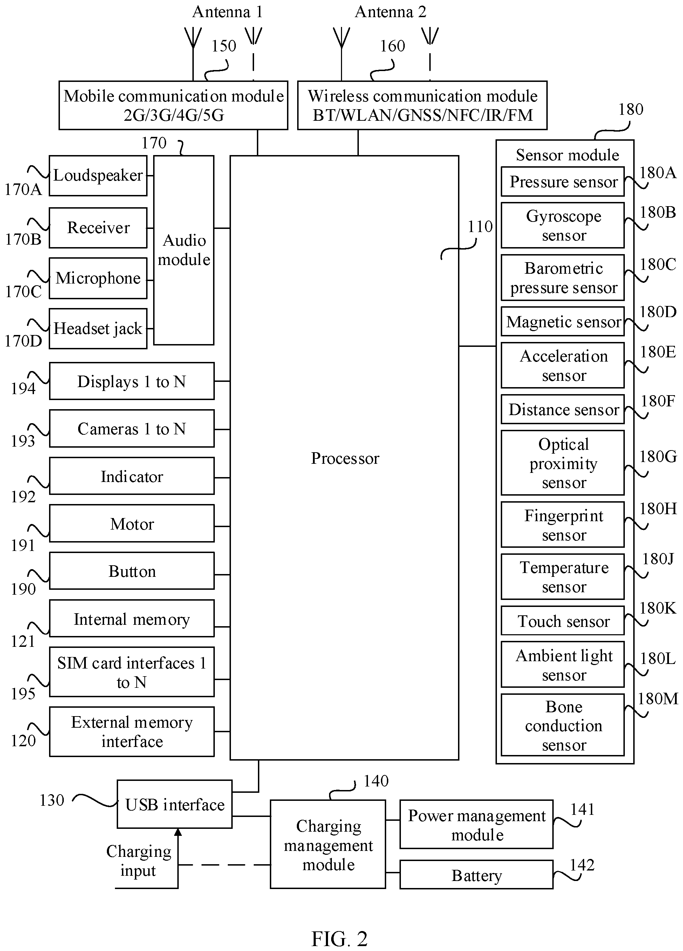

FIG. 2 is a diagram of a structure of an electronic device. The electronic device is, for example, a mobile phone. As shown in FIG. 2, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors. The controller may be a nerve center and a command center of the electronic device. The controller may generate an operation control signal based on instruction operation code and a time sequence signal, to complete control of instruction reading and instruction execution. A memory may further be disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset, to play an audio by using the headset. The interface may be further configured to connect to another electronic device such as an AR device.

It may be understood that an interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to send and receive an electromagnetic wave signal. Each antenna of the electronic device may be configured to cover one or more communication frequency bands. Different antennas may further be multiplexed, to improve antenna utilization. For example, the antenna 1 may be multiplexed as a diversity antenna of a wireless local area network. In other embodiments, the antenna may be used in combination with a tuning switch.

The mobile communication module 150 may provide a solution to wireless communication such as 2G/3G/4G/5G applicable to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution to wireless communication applicable to the electronic device, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology.

The display 194 is configured to display a display interface of an application, and the like. The display 194 includes a display panel. In some embodiments, the electronic device may include one or N displays 194, where N is a positive integer greater than 1.

The electronic device 100 may implement a photographing function through the camera 193, the ISP, the video codec, the GPU, the display 194, the application processor and the like. The ISP may be configured to process the image data collected by the camera 193.

The internal memory 121 may be configured to store computer-executable program code, and the executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application program, and the like. The data storage area may store data (for example, an image or a video) generated in a process of using the electronic device, and the like. In addition, the internal memory 121 may include a high-speed random access memory, or may include a nonvolatile memory, for example, at least one magnetic disk storage device, a flash memory, or a universal flash storage.

The external memory interface 120 may be configured to connect to an external storage card, for example, a micro SD card, to extend a storage capability of the electronic device. The external storage card communicates with the processor 110 through the external memory interface 120, to implement a data storage function. For example, files such as pictures or videos are stored in the external memory card.

The electronic device may implement audio functions by using the audio module 170, the loudspeaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The loudspeaker 170A, also referred to as a "horn", is configured to convert an electrical audio signal into a sound signal. The electronic device 100 may listen to music by using one or more loudspeakers 170A, or may be used in a speaker scenario, for example, answering a hands-free call.

The receiver 170B, also referred to as an "earpiece", is configured to convert an electrical audio signal into a sound signal, and there may be one or more receivers 170B. When a call is answered or speech information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the electronic device. In some embodiments, angular velocities of the electronic device around the three axes (that is, the x-axis, the y-axis, and the z-axis) may be determined by using the gyroscope sensor 180B. The gyroscope sensor 180B may be configured to implement image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall effect sensor. The electronic device may detect opening and closing of a flip cover by using the magnetic sensor 180D.

The acceleration sensor 180E may detect accelerations in various directions (usually on three axes) of the electronic device. When the electronic device is static, magnitude and a direction of gravity may be detected.

The distance sensor 180F is configured to measure a distance. The electronic device may measure the distance through infrared or laser.

The optical proximity sensor 180G may include, for example, a light emitting diode (LED) and an optical detector, for example, a photodiode. The light emitting diode may be an infrared light emitting diode. The electronic device emits infrared light outwards through the light-emitting diode. The electronic device uses the photodiode to detect infrared reflected light from a nearby object. When detecting sufficient reflected light, the electronic device may determine that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display 194 based on the sensed brightness of the ambient light.

The fingerprint sensor 180H is configured to collect a fingerprint.

The temperature sensor 180J is configured to detect a temperature.

The touch sensor 180K is also referred to as a touch panel. The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor. The touch sensor may transfer the detected touch operation to the application processor to determine a type of the touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch-sensitive button. The electronic device may receive a key input, and generate a key signal input related to user setting and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or pulled out of the SIM card interface 195, to implement contact with or separation from the electronic device.

It may be understood that components shown in FIG. 2 do not constitute a specific limitation on the electronic device. The electronic device in embodiments of the present invention may include more or fewer components than those in FIG. 2. In addition, a combination/connection relationship between the components in FIG. 2 may also be adjusted and modified.

The following describes the technical solutions of this application with reference to the accompanying drawings by using an example in which the electronic device is a mobile phone.

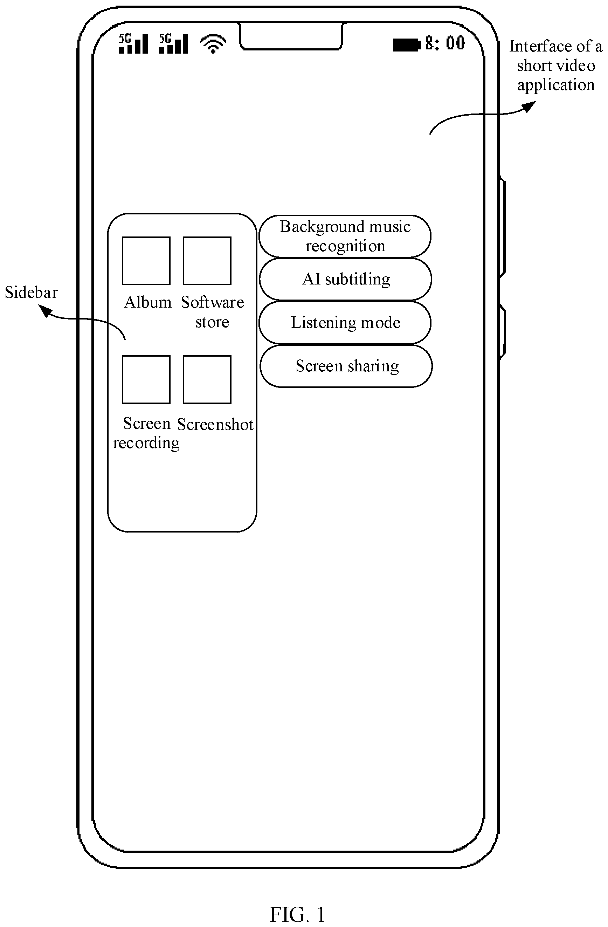

To facilitate a user operation, the electronic device may recommend information to a user in a use process. For example, some applications in the electronic device have an information recommendation function. When starting the application, the electronic device may display a sidebar on a display to recommend information to the user. For example, refer to FIG. 1. The electronic device opens an interface of a short video application. Because the application has an information recommendation function, the sidebar is displayed on the display of the electronic device, and the sidebar includes icons of recommended functions such as Album, Software store, and Screenshot, and further includes icons of recommended functions such as background music recognition and AI subtitling. When the electronic device closes the application, the information recommendation function is disabled accordingly. If the electronic device opens another application that does not have an information recommendation function, the sidebar is not displayed on the display of the electronic device. In this case, the user cannot continue to use a function in the sidebar as required. This manner is not flexible. For the application that does not have the information recommendation function, the user cannot use the sidebar. A user operation is not convenient, and user experience is poor.

An embodiment of this application provides an information recommendation method. In the method, an electronic device may obtain first information, determine, based on the first information, second information to be recommended to a user, and display a sidebar on a display of the electronic device, where the sidebar includes the second information. The first information includes at least one of a current geographical location, a current running application, a current posture, and current display information of the electronic device. In other words, the electronic device may determine recommended information (namely, the second information) in the sidebar based on the current geographical location, that is, when the current geographical location is different, information in the sidebar is different. Alternatively, recommended information in the sidebar may be determined based on the current running application, that is, when the current running application is different, information in the sidebar may be different. Alternatively, recommended information in the sidebar may be determined based on the current posture. For example, the electronic device is a foldable device, and information in the sidebar is different in different folded states. Alternatively, recommended information in the sidebar may be determined based on the current display information, that is, when the current display information is different, the information in the sidebar is different. According to the information recommendation method provided in this embodiment of this application, appropriate information may be recommended to the user, to reduce a possibility that the user searches for a function that currently needs to be used from a plurality of functions, provide a convenient operation entry for the user, reduce operation steps of the user, and improve operation experience of the user. In addition, in this application, the electronic device may determine the recommended information in the sidebar based on a plurality of types of information. In other words, accuracy of the determined recommended information is high. This further improves experience.

The following describes, by using the technical solutions provided in embodiments of this application, a process of displaying the sidebar to recommend information to the user.

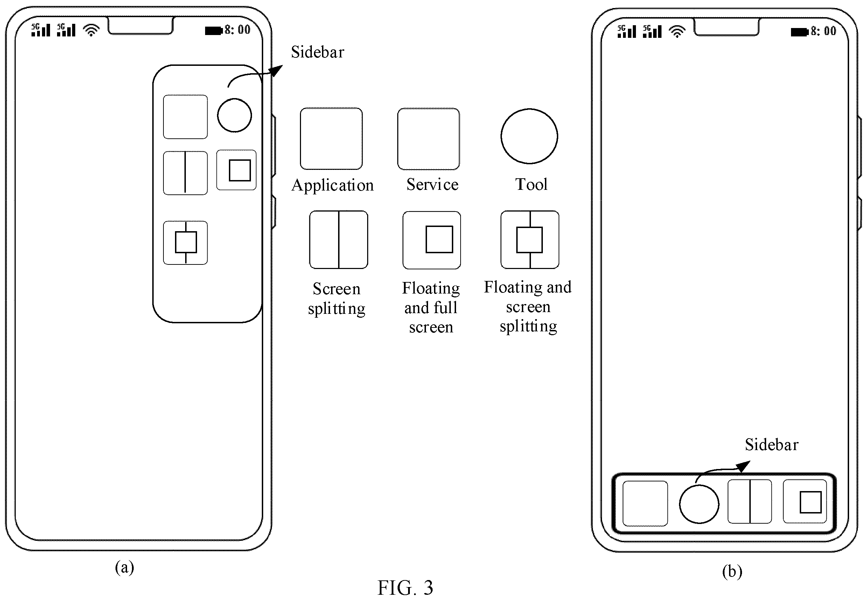

In embodiments of this application, when recommending the information to the user, the electronic device recommends the information in a sidebar (sidebar) manner. For example, the electronic device displays the sidebar, and the sidebar includes the information recommended to the user. The sidebar may be understood as a display area on the display of the electronic device, and the display area includes the information recommended to the user. Generally, in order not to block the display, the sidebar may be displayed at a location on the display close to an edge. For example, (a) in FIG. 3 is a diagram of the sidebar. It should be understood that, in (a) in FIG. 3, for example, the sidebar is displayed in an area on the display close to a right edge. Actually, a display location of the sidebar may be random. For example, the sidebar may alternatively be displayed in an area on the display close to a left edge, an upper edge, a lower edge, or the like. For example, in (b) in FIG. 3, the sidebar is displayed at a bottom location. For example, after the sidebar appears, the location of the sidebar may move, for example, move from a location close to the right edge to a location close to the lower edge. In some examples, the sidebar may be manually called out by the user or automatically appear. If the sidebar is manually called out by the user, the display location of the sidebar is related to a direction of a manual operation. For example, when the user calls out the sidebar from the left edge of the display (for example, a finger of the user swipes from the left edge of the display to an inner side of the display), the sidebar is displayed at a location close to the left edge. For another example, when the user calls out the sidebar from the right edge of the display (for example, a finger of the user swipes from the right edge of the display to the inner side of the display), the sidebar is displayed at a location close to the right edge. If the sidebar appears automatically, the sidebar may appear at any location on the display close to the upper edge, the lower edge, the left edge, or the right edge. It should be understood that the sidebar may alternatively be displayed at another location other than an edge of the screen. In some other examples, the display location of the sidebar may alternatively be fixed, for example, the sidebar is fixedly displayed at a location on the display close to the right edge. In this way, the sidebar is displayed at the fixed location regardless of whether the user manually calls out the sidebar (calls out the sidebar from all directions) or the sidebar automatically appears. For example, the fixed location may be defaulted by a system or set by the user. This is not limited in embodiments of this application. In conclusion, the display location of the sidebar is not limited in embodiments of this application. As mentioned above, the sidebar may be manually called out by the user or automatically appears. A specific implementation is described below.

The sidebar includes the information recommended by the electronic device to the user. In some examples, the information recommended by the electronic device to the user may include: one or more applications, one or more services, one or more tools, and the like. Therefore, the sidebar may include icons of the one or more applications, icons of the one or more services, icons of the one or more tools, and the like. The application is an application (application, APP) installed in the electronic device, for example, an album application, a video playing application, an instant messaging application, or a multimedia application, and may be an application downloaded by the electronic device from a network or provided by the system. The service may be a service provided by the electronic device for the user to implement a service, for example, a projection service or a hopping service. The tool may be a tool that is set in the electronic device to implement a function, for example, a screenshot tool or a screen recording tool. It may be understood that, for ease of distinguishing by the user, the icons of the application, the service, and the tool in the sidebar may not be completely the same. For example, shapes of the icons are different, and/or texts, images, and the like in the icons are different. For example, as shown in FIG. 3, the icons of both the application and the service are squares with rounded corners, and the icon of the tool is a circle. A mark (for example, a text and/or an image) of the application may be displayed on the icon of the application, and a mark (for example, a text and/or an image) of the service may be displayed on the icon of the service for differentiation.

In some examples, the information recommended by the electronic device to the user may include a multi-application combination. The multi-application combination includes, for example, a split-screen combination, a floating and full-screen combination, or a floating and split-screen combination. Therefore, an icon of the multi-application combination may be displayed in the sidebar, for example, an icon of the split-screen combination (screen splitting icon for short), an icon of the floating and full-screen combination (floating and full screen icon for short), or an icon of the floating and split-screen combination (floating and screen splitting icon for short). For example, still refer to FIG. 3. The screen splitting icon indicates two applications to be displayed in split screen, the floating and full-screen icon indicates one application to be displayed in full screen and another application to be displayed on an upper layer of the application in a floating manner, and the floating and screen splitting icon indicates two applications to be displayed in split screen and another application to be displayed on an upper layer in the floating manner.

The foregoing is a description of the recommended information included in the sidebar. It should be understood that the electronic device may first determine the to-be-recommended information, and then display the recommended information by using the sidebar. In this embodiment of this application, the electronic device may determine the recommended information in at least one of the following Manner 1 to Manner 4.

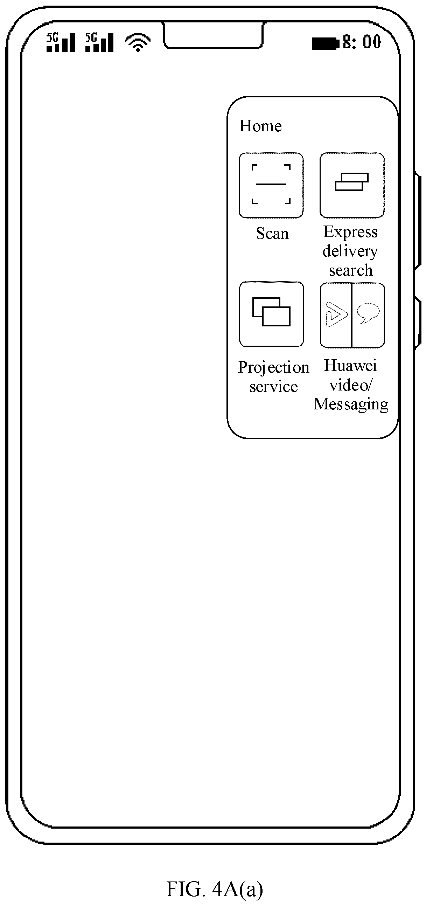

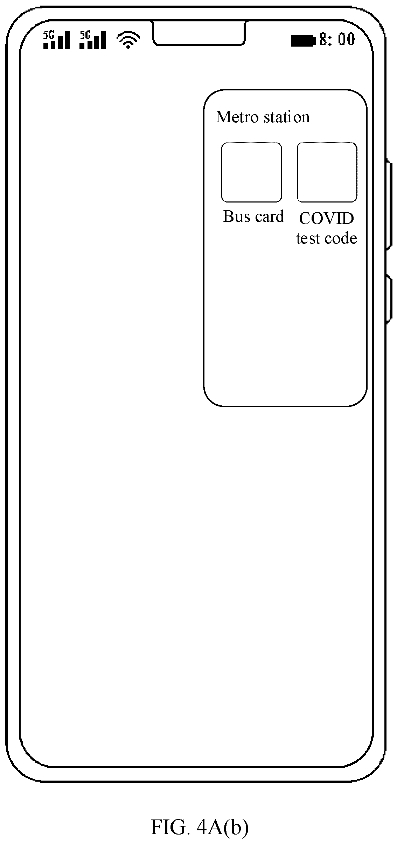

Manner 1: The electronic device determines the recommended information based on the current geographical location.
(1) In some examples, the recommended information includes an application, a service, a tool, a multi-application combination, and/or the like that are/is used by the electronic device at the current geographical location more than a preset quantity of times. For example, the electronic device may record a quantity of times of using the application, the service, the tool, the multi-application combination, and the like at each geographical location. When it is detected that the electronic device is currently at a geographical location, icons of an application, a service, a tool, a multi-application combination, and the like that are used at the geographical location more than the preset quantity of times are displayed by using the sidebar. For example, refer to FIG. 4A(a). The electronic device determines that the electronic device is currently at home, and the sidebar includes icons of applications or services that are frequently used by the user at home, such as Express delivery search, Scan, and Projection service. Alternatively, when the user is at home, the user often controls the electronic device to display the video playing application (for example, a Huawei video application) and the instant messaging application (for example, Messaging) in split screen, for example, the user watches a movie while chatting. Therefore, a screen splitting icon may be further displayed in the sidebar, as shown in FIG. 4A(a). The screen splitting icon indicates the Huawei video application and Messaging to be displayed in split screen.
(2) In some examples, the recommended information includes an application, a service, a tool, a multi-application combination, and/or the like that are commonly used at the current geographical location. Herein, "an application, a service, a tool, a multi-application combination, and the like that are commonly used at a geographical location" may be understood as an application, a service, a tool, a multi-application combination, and the like that most users need to use at the geographical location. For example, refer to FIG. 4A(b). The electronic device determines that the electronic device is currently located in a metro station, and icons of applications that may need to be used by most users in the metro station, such as a bus card and a COVID test code, are displayed in the sidebar.
(3) In some examples, the recommended information includes an application, a service, a tool, a multi-application combination, and/or the like that are set by the user or set by the system by default for use at the current geographical location. For example, it is defined by the user or defaulted by the system that the user needs to use services such as Projection service and Express delivery search, and screen splitting of Huawei video and Messaging at home. When the electronic device detects that the electronic device is at home, icons of the services such as Projection service and Express delivery search, and a screen splitting icon for Huawei video and Messaging are displayed in the sidebar, as shown in FIG. 4A(a).

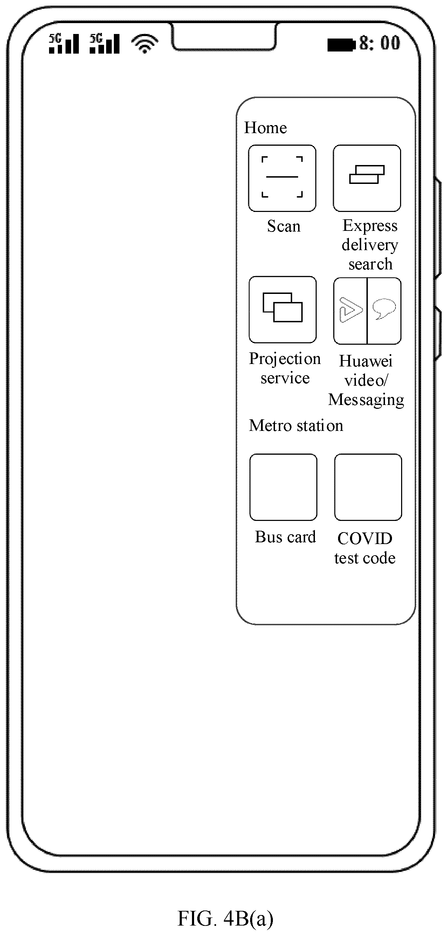

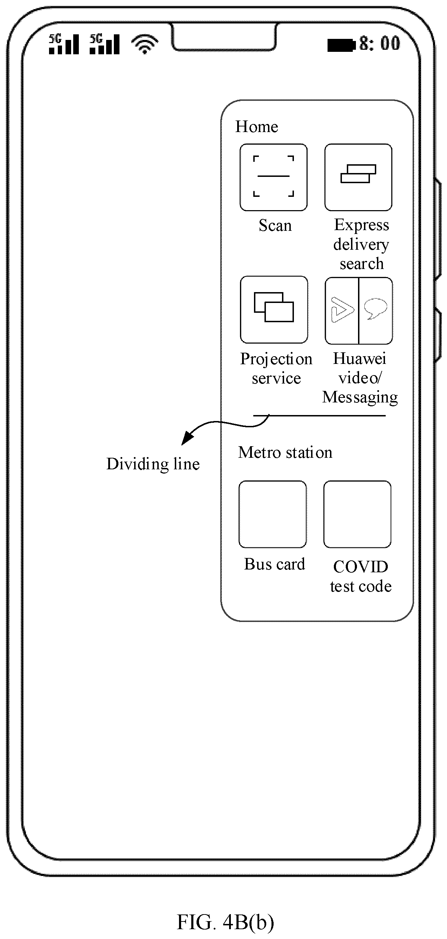

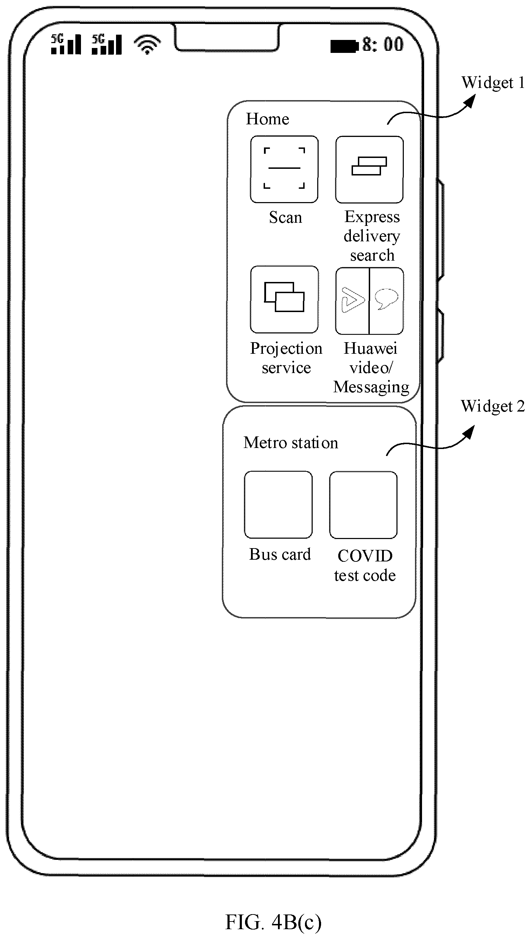

There is a case in which the electronic device may detect a plurality of geographical locations. For example, the electronic device is currently located at a location 1, and a location 2, a location 3, and the like exist around the location 1. In this case, the electronic device may determine recommended information (an application, a service, a tool, a multi-application combination, and the like) corresponding to each location, and then display, in the sidebar, an icon of the recommended information corresponding to each location. When icons of the recommended information corresponding to each location are displayed, the icons may be displayed in a specific sequence. For example, if the current location is the location 1, and the location 2 and the location 3 gradually move away from the location 1, an icon of recommended information corresponding to the location 1, an icon of recommended information corresponding to the location 2, and an icon of recommended information corresponding to the location 3 are respectively sequentially displayed from top to bottom in the sidebar. Generally, information in an upper part is preferentially noticed by the user. Therefore, such display helps the user quickly find recommended information corresponding to a current location (namely, the location 1). An operation is convenient. For example, as shown in FIG. 4B(a), the electronic device is currently located at home, but two geographical locations: the home and the metro station are recognized. In this case, icons of recommended information corresponding to the home and the metro station are displayed in the sidebar from top to bottom. For ease of distinguishing by the user, a dividing line may be set between icons of recommended information corresponding to different locations in the sidebar. For example, in FIG. 4B(b), there is a dividing line between recommended information corresponding to two geographical locations. It should be noted that in FIG. 4B(a) and FIG. 4B(b), for example, the sidebar occupies one widget (namely, one display area). In some examples, the sidebar may include a plurality of widgets, and recommended information corresponding to different locations may be separately located in different widgets. For example, refer to FIG. 4B(c). Recommended information corresponding to two geographical locations is separately displayed in a widget 1 and a widget 2, and there is a spacing between the widget 1 and the widget 2. In this way, it can be convenient for the user to view the recommended information.

For example, the electronic device may detect the current geographical location by using a positioning technology. There are a plurality of positioning technologies, for example, global positioning system (Global Positioning System, GPS) positioning and Wi-Fi positioning. This is not limited in embodiments of this application.

Manner 2: The electronic device determines the recommended information based on the current running application.

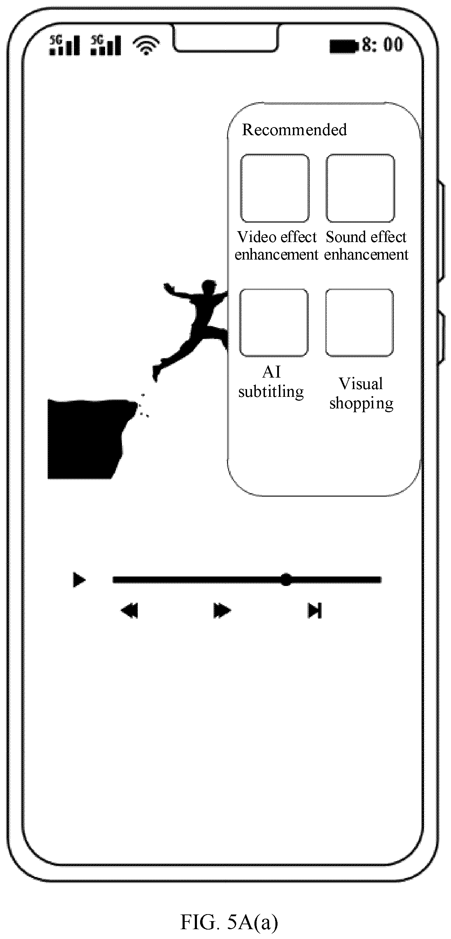

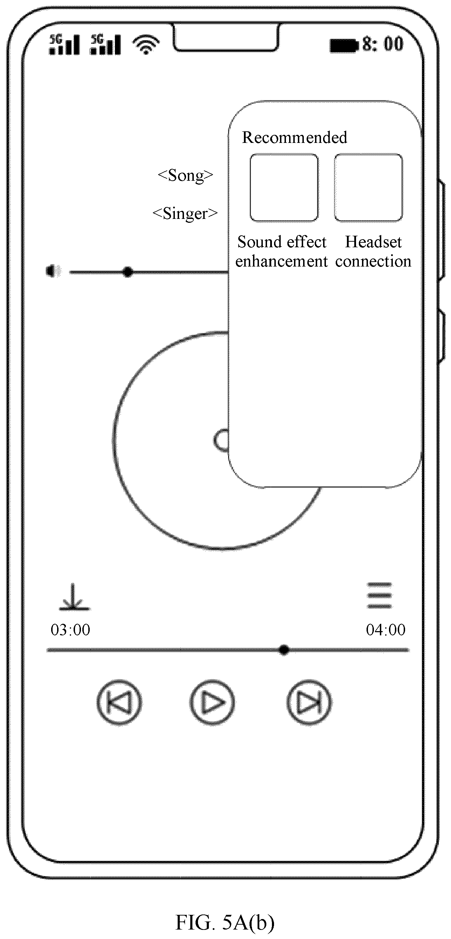

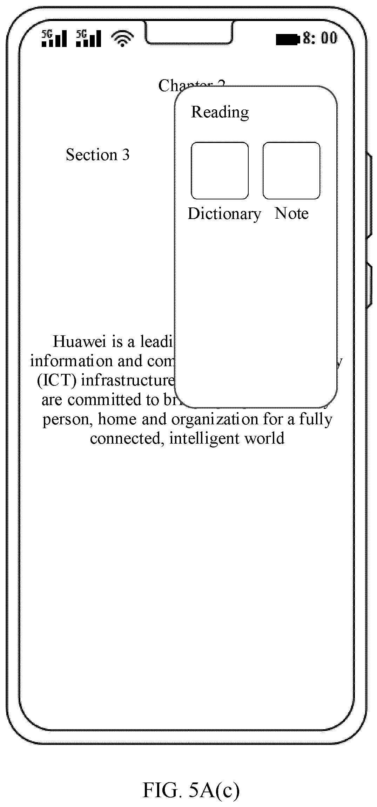

For example, the electronic device may determine the recommended information based on a type of the current running application (including applications running in a foreground and/or in a background). In other words, when types of current running applications are different, recommended information in the sidebar is different. For example, if the current running application is a video playing application, for example, Huawei video, the recommended information includes services such as video effect enhancement, sound effect enhancement, AI subtitling, visual shopping, and song listening and recognition. For another example, if the current running application is an audio playing application, for example, Huawei music, the recommended information includes services such as headset connection and sound effect enhancement. For another example, if the current running application is a reading application (for example, an e-book app), icons of services such as a dictionary and a note are displayed in the sidebar. For example, as shown in FIG. 5A(a), the electronic device runs the video playing application in the foreground, and the sidebar includes icons of the services such as video effect enhancement, sound effect enhancement, AI subtitling, and visual shopping. As shown in FIG. 5A(b), the electronic device currently plays a song (which may be playing a song in the foreground or the background), and the sidebar includes the icons of the services such as headset connection and sound effect enhancement. As shown in FIG. 5A(c), if the electronic device currently runs the e-book application, the icons of the services such as the dictionary and the note are displayed in the sidebar. Therefore, in this manner, when the types of the current running applications are different, the sidebar includes different recommended information, to recommend, to the user, information applicable to the current running application. This facilitates a user operation, and improves user experience.

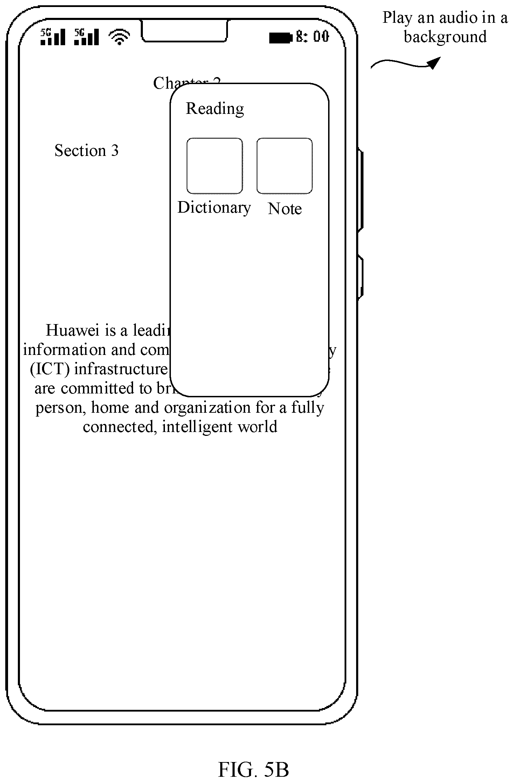

It may be understood that the electronic device may simultaneously run a plurality of applications. In this case, the electronic device may determine a target application from the plurality of applications, and determine recommended information based on a type of the target application. The electronic device selects the target application from the plurality of applications in a plurality of manners, for example, may select the target application according to a priority rule. The priority rule includes, for example, foreground application>background application. For example, refer to FIG. 5B. The electronic device opens the reading application in the foreground, and runs the music playing application in the background. Because a priority of the foreground application is higher than a priority of the background application, recommended information related to the foreground application is displayed in the sidebar, for example, the icons of the services such as the dictionary and the note. The priority strategy may be further subdivided. For example, if the foreground application includes a full-screen application and a non-full-screen application (for example, an application displayed in a floating manner), the priority is subdivided into: full-screen application>non-full-screen application>background application. It may be understood that there is a case in which a plurality of applications are at a same priority. For example, a plurality of applications are run in the background. In this case, a target application may be selected based on a quantity of use times, and an application with a largest quantity of use times is the target application. It should be understood that if the electronic device currently runs only one application (including one application running in the foreground, or a home screen displayed in the foreground and one application running in the background), the recommended information is determined based on the application, and the target application does not need to be selected.

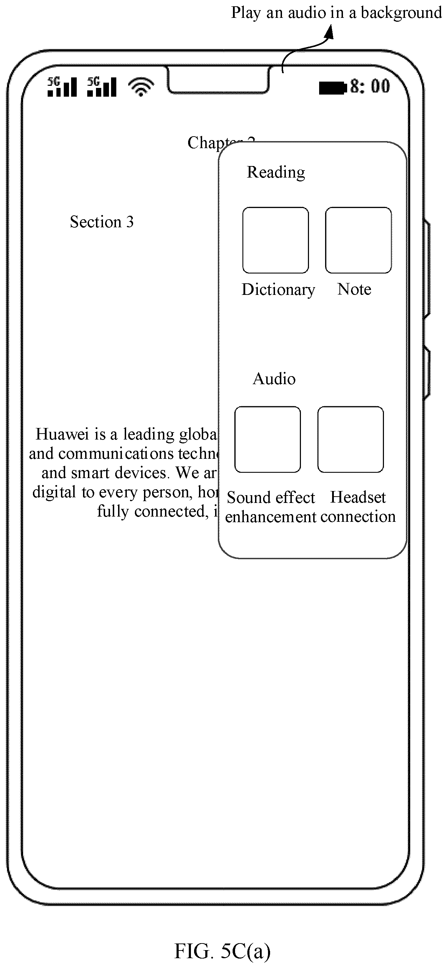

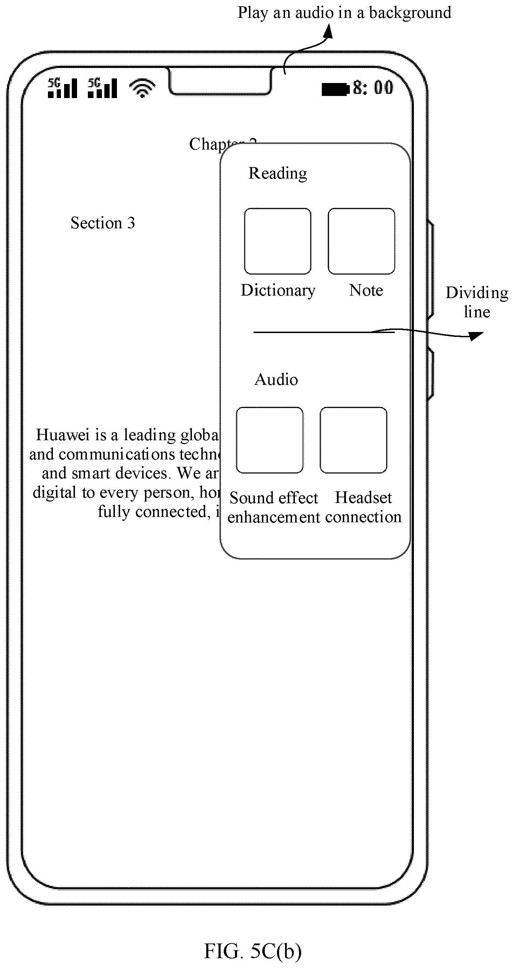

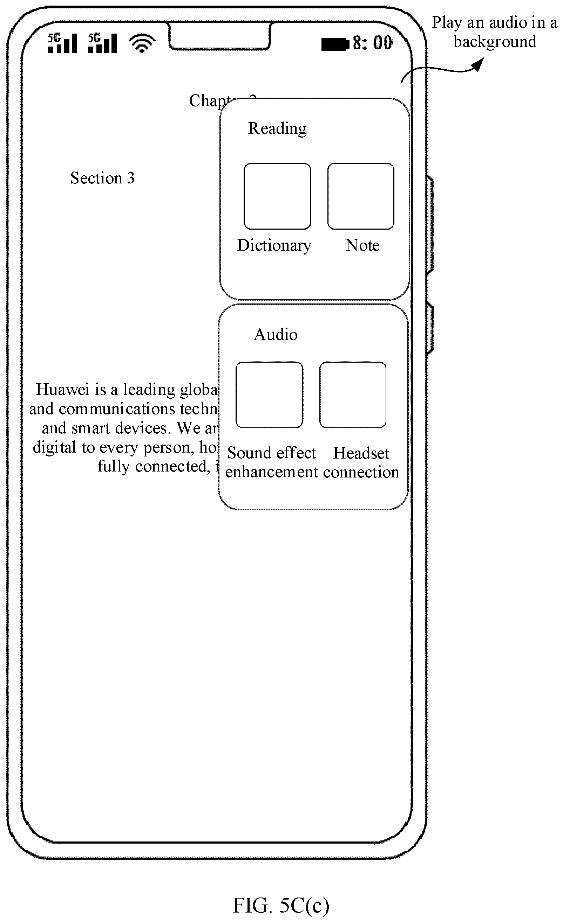

In some other examples, when there are a plurality of current running applications, recommended information corresponding to each application may be displayed in the sidebar. Recommended information of different applications may be sorted and displayed from top to bottom according to the foregoing priority strategy. For example, the electronic device runs the reading application in the foreground, and runs the audio playing application in the background. Recommended applications related to the two applications may be separately displayed in the sidebar. Because the priority of the foreground application is higher than the priority of the background application, as shown FIG. 5C(a), an icon of the recommended information of the reading application and an icon of the recommended information of the audio playing application are sequentially displayed in the sidebar from top to bottom. Alternatively, the electronic device may perform display in a manner of FIG. 5C(b), that is, a dividing line is provided between recommended information of different applications. Alternatively, the electronic device performs display in a manner of FIG. 5C(c), that is, recommended information of different applications is located on different widgets. An implementation principle of FIG. 5C(a) to FIG. 5C(c) is the same as an implementation principle of FIG. 4B(a) to FIG. 4B(c). Details are not described again.

Manner 3: The electronic device determines the recommended information based on the current posture.

For example, the electronic device is an electronic device having a foldable screen, and a posture of the electronic device includes an unfolded state, a folded state, and a support state. The unfolded state may be understood as that the display is completely expanded by 180 degrees, the folded state may be understood as that the display is folded by 0 degrees, and the support state may be understood as a state between 0 degrees in the folded state and 180 degrees in the unfolded state. For example, it is considered that the user may open a plurality of applications to perform an operation in the support state. Therefore, when the electronic device is in the support state, the recommended information may include a multi-screen combination, that is, the sidebar includes a screen splitting icon.

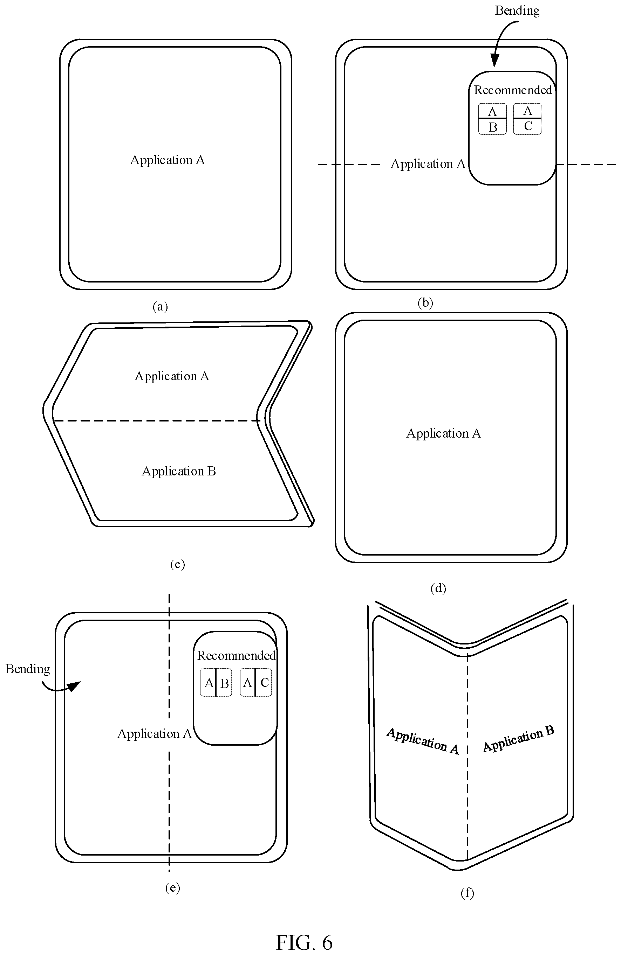

Refer to (a) in FIG. 6. In some examples, an application A is displayed in the foreground when the electronic device is in the unfolded state. When it is detected that the electronic device is switched from the unfolded state to the support state, the sidebar is automatically displayed on the display, as shown (b) in FIG. 6. The sidebar includes the screen splitting icon, for example, a screen splitting icon for the application A and an application B, or a screen splitting icon for the application A and an application C. For example, the application B and the application C may be applications that are frequently displayed by the user with the application A in split screen, or applications that are switched with the application A a quantity of times greater than a preset quantity of times (for example, the user often switches from the application A to the application B/application C, or switches from the application B/application C to the application A), or applications that are defined by the user for display with the application A in split screen, or applications that are set by the system by default for display with the application A in split screen, or applications that are run in the foreground before the application A, or applications that are likely to be used after the application A based on a use habit of the user, or the like. It is assumed that the user taps the screen splitting icon for the application A and the application B in the sidebar. As shown in (c) in FIG. 6, the electronic device enters a split-screen mode in the folded state, and the application A and the application B are displayed in split screen.

In some other examples, the information recommended in the sidebar may be a screen splitting icon for another page of the application A and a current display page. For example, if a page P of the application A is displayed in (a) in FIG. 6, the information recommended in the sidebar when the electronic device is being folded may be screen splitting for a previous page or a next page of the page P and the page P.

In some examples, a screen splitting manner of the screen splitting icon in the sidebar is related to a folding direction of the electronic device. For example, in (a) and (b) in FIG. 6, the electronic device is up-down folded. Therefore, the screen splitting icon in the sidebar is for up-down screen splitting, that is, up-down screen splitting of the application A and the application B, up-down screen splitting of the application A and the application C, and the like. In this case, it may be understood that when the electronic device is left-right folded, the screen splitting icon in the sidebar may be for left-right screen splitting. For example, refer to (d) in FIG. 6. When the electronic device is in the unfolded state, the application A is displayed in the foreground. When an operation of switching from the unfolded state to the folded state (a left-right folding operation) is received, the sidebar appears on the display, and the sidebar includes a screen splitting icon. As shown in (e) in FIG. 6, the screen splitting icon is for left-right screen splitting, for example, an icon for left-right screen splitting of the application A and the application B, and an icon for left-right screen splitting of the application A and the application C. It is assumed that the user selects the icon for left-right screen splitting of the application A and the application B. As shown in (f) in FIG. 6, when the electronic device is switched to the folded state, the electronic device enters the split-screen mode, and the application A and the application B are displayed in left-right split screen.

It should be understood that a display form of the screen splitting icon in the foregoing embodiment is merely an example, and a function of the screen splitting icon is to implement quick split-screen display by tapping the screen splitting icon. In another embodiment, the display form of the screen splitting icon is not necessarily a form of A and B shown in the figure, and may display only B, a graph in another form, or the like. This is not limited in this application.

Manner 4: The electronic device determines the recommended information based on the current display information on the display.

In some examples, the recommended information is related to content of the current display information of the electronic device. For example, when a current display interface of the electronic device includes English, the recommended information includes a dictionary, and the sidebar includes an icon of the dictionary, or when the current display information includes an image/a video, the recommended information includes visual shopping, that is, the sidebar includes an icon of visual shopping. That is, when content of the current display interface changes, the recommended information in the sidebar changes, to adapt to the current display information in real time. In this case, it may be understood that, in a possible example, when an application is running in the foreground, if a display interface of the application changes, the recommended information in the sidebar may change accordingly. For example, when a browser application is running, and when an English document is displayed, the icon of the dictionary is displayed in the sidebar, or when the video is displayed, the sidebar displays the icon of visual shopping.

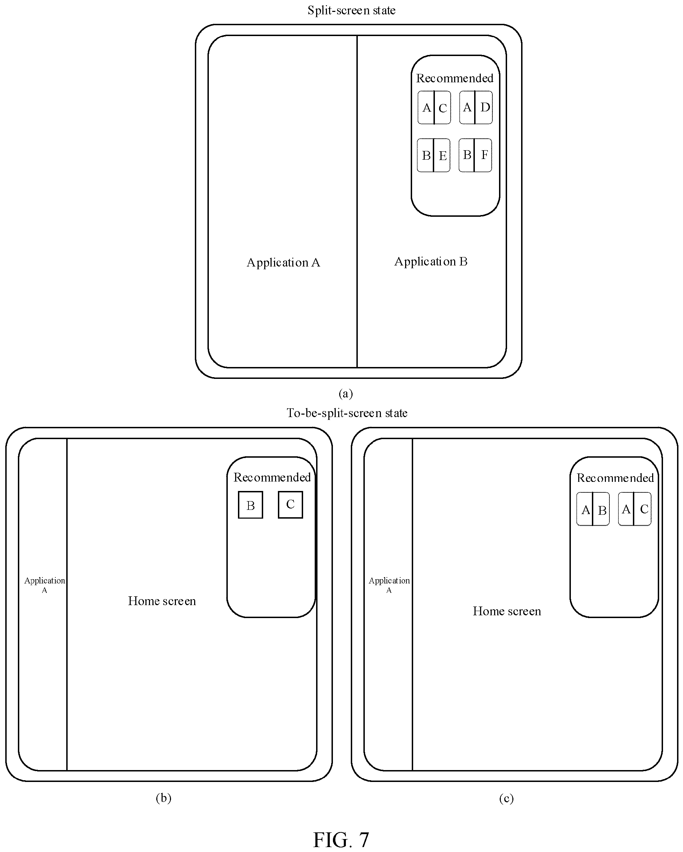

In some other examples, the recommended information is related to a layout status of the current display information of the electronic device. For example, the layout status includes a split-screen state, a to-be-split-screen state, or the like. For example, in the split-screen state shown in (a) in FIG. 7, the electronic device displays an application A and an application B in split screen. In this case, the sidebar may include a screen splitting icon for the application A and another application (for example, an application that is frequently displayed by the user with the application A in split screen, or an application that is switched with the application A a quantity of times greater than a preset quantity of times, or an application that is defined by the user or by system default for display with the application A in split screen), for example, a screen splitting icons for the application A and an application C, and a screen splitting icon for the application A and an application D. Alternatively, a screen splitting icon for the application B and another application (for example, an application that is frequently displayed by the user with the application B in split screen, or an application that is switched with the application B a quantity of times greater than a preset quantity of times, or an application that is defined by the user or by system default for display with the application B in split screen), for example, a screen splitting icon for the application B and an application E, a screen splitting icon for the application B and an application F, and the like, may be further displayed in the sidebar. It should be noted that, if the application A and the application B in (a) in FIG. 7 are in up-down screen splitting, the screen splitting icon in the sidebar may be for up-down screen splitting.

For example, the to-be-split-screen state may be understood as a state in which there is a screen splitting intention but screen splitting is not performed yet. For example, as shown in (b) in FIG. 7, when the electronic device displays a home screen, an interface of the application A appears on the left side of the display through a trigger operation (for example, a touch and hold operation on the screen) of the to-be-split-screen state. This layout status is the to-be-split-screen state, namely, a state in which screen splitting with the application A is to be performed. In the to-be-split-screen state, an icon of another application used in split screen with the application A on the left side may be displayed in the sidebar. For example, as shown in (b) in FIG. 7, icons of the application B, the application C, and the like are displayed in the sidebar. When the user selects the icon of the application B, a split-screen mode of the application A and the application B is entered. Alternatively, in the to-be-split-screen state, a screen splitting icon may be displayed on the sidebar, and the screen splitting icon indicates screen splitting of the application A and another application. For example, as shown in (c) in FIG. 7, the sidebar includes a screen splitting icon for the application A and the application B, a screen splitting icon for the application A and the application C, and the like.

The foregoing are four manners of determining the recommended information. The electronic device may use any one of the foregoing four manners, or combine any two or more of the foregoing four manners for use. This is not limited in embodiments of this application. A combination of Manner 1 and Manner 2 is used as an example. When the electronic device fails to determine the recommended information based on the current geographical location, the electronic device may continue to determine the recommended information in Manner 2. Alternatively, when determining a plurality of pieces of recommended information based on the current geographical location, the electronic device may continue to select target recommended information (which may be one or more pieces of recommended information) from the plurality of pieces of recommended information in Manner 2. In this way, the determined recommended information is accurate. It may be understood that there is a case in which the electronic device fails to determine the recommended information in any one or a combination of the foregoing four manners. In this case, icons of an application, a service, a tool, and a multi-application combination that have been recently used by the user may be displayed in the sidebar. That is, when no recommended information is found, recently used information is displayed to the user.

In some examples, the sidebar may automatically appear or appear when a call-out operation of the user is received. When the side screen is called out, the sidebar may be displayed in the floating manner on a current interface or displayed in split screen with a current interface.

For example, the sidebar automatically appears. The electronic device may determine the recommended information based on any one or more of Manner 1 to Manner 4, and automatically display the sidebar after determining the recommended information (the application, the service, the tool, the multi-application combination, and the like). The sidebar includes the icon of the recommended information. In this manner, the sidebar may frequently appear and block the screen. To avoid this case, after determining the recommended information, the electronic device may wait for preset duration before automatically displaying the sidebar. For example, after determining the recommended information in Manner 1 (determining the recommended information based on the current geographical location), the electronic device may wait for a period of time (for example, determine that duration in which the user stays in the current geographical location is greater than preset duration) before automatically displaying the sidebar, to avoid frequent appearance of the sidebar. For another example, after determining the recommended information in Manner 4 (determining the recommended information based on the current display information of the electronic device), the electronic device may wait for a period of time (for example, in (a) in FIG. 7, determine that maintenance duration of the split-screen state is greater than preset duration) before displaying the sidebar.

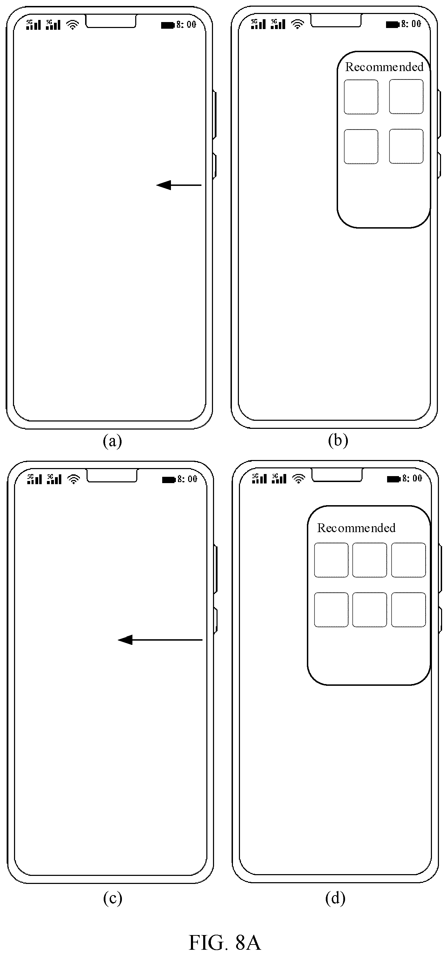

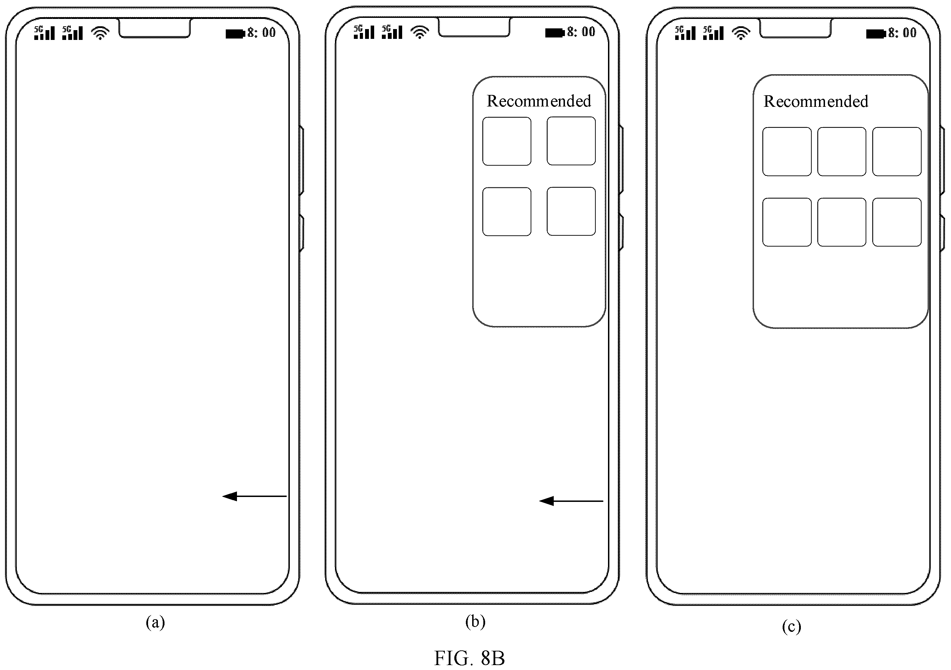

For example, the sidebar is manually called out by the user. When receiving the call-out operation for the sidebar, the electronic device displays the sidebar. For example, the call-out operation for the sidebar includes an operation of swiping from an edge (the upper edge, the lower edge, the left edge, or the right edge) of the display to the inner side of the display. For example, as shown in (a) in FIG. 8A, when receiving a swipe operation from the right edge of the display to the inner side, the electronic device calls out the sidebar, as shown in (b) in FIG. 8A. In some examples, when the sidebar is called out, a display width of the sidebar may be related to a swipe distance of the swipe operation. For example, when the swipe distance from the right edge of the display to the inner side is small, the width of the sidebar is small. When the swipe distance from the right edge of the display to the inner side is long, the width of the sidebar is large. For example, refer to (c) in FIG. 8A. When the electronic device receives the swipe operation from the right edge of the display to the inner side, and the swipe distance of the swipe operation is long, the width of the sidebar is large, as shown in (d) in FIG. 8A. Alternatively, when receiving the swipe operation from the right edge of the display to the inner side, the electronic device first displays a narrow sidebar. If the swipe operation from the right edge of the display to the inner side or a swipe operation from the left edge of the narrow sidebar to the inner side of the display is received again, the electronic device widens the sidebar. For example, refer to (a) in FIG. 8B. When receiving the swipe operation from the right edge of the display to the inner side, the electronic device calls out the sidebar. As shown in (b) in FIG. 8B, the sidebar is narrow. When receiving the swipe operation from the right edge of the display to the inner side again, the electronic device widens the sidebar, as shown in (c) in FIG. 8B. In this way, a case in which a large display size is blocked when the sidebar appears can be avoided. The sidebar is displayed in a large display size when required by the user.

In some examples, to fully use the display area of the sidebar, when the sidebar is widened, adjustment may be performed on an internal icon.

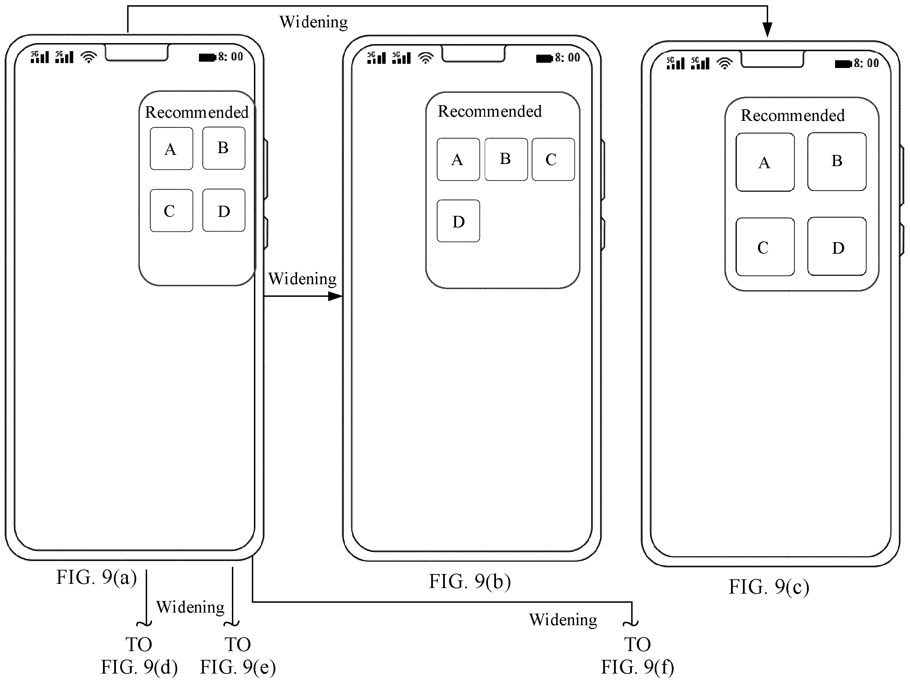

For example, after the sidebar is widened, an icon layout manner or an area occupied by the icon in the sidebar is adjusted. For example, refer to FIG. 9(a). Before the sidebar is widened, icons in the sidebar include four icons of the application A to the application D. After the sidebar is widened, the sidebar still includes the four icons, but an arrangement manner of the four icons changes, as shown in FIG. 9(b). Alternatively, as shown in FIG. 9(c), after the sidebar is widened, the area occupied by the icon in the sidebar becomes larger, to facilitate tapping by the user.

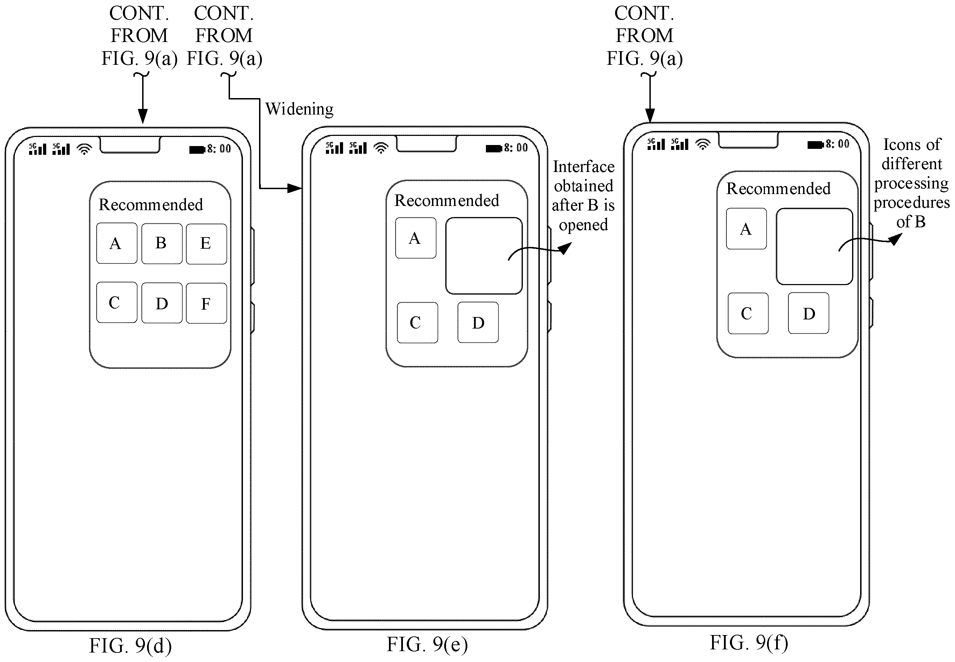

For another example, after the sidebar is widened, a quantity of icons in the sidebar increases. For example, as shown in FIG. 9(a), before the sidebar is widened, the sidebar includes four icons. After the sidebar is widened, the sidebar includes six icons. As shown in FIG. 9(d), icons of the application E and the application F are added. It should be noted that the added icon may be of an application with a low confidence level determined in Manner 1 to Manner 4. Manner 1 is used as an example. It is determined, based on the current geographical location, that 10 applications are frequently used by the user, where five applications are used a large quantity of times (with a high confidence level), and the other five applications are used a small quantity of times (with a high confidence level). In this case, when the sidebar is narrow, only icons of the five applications that are used a large quantity of times may be displayed. After the sidebar is widened, icons of one or more of the five applications that are used a small quantity of times may be added to the sidebar. Alternatively, the added icon may not be an icon of an application determined in Manner 1 to Manner 4, for example, may be an icon of an application recently used by the user, an icon of an application set by default, or an icon of an application defined by the user.

For another example, after the sidebar is widened, an application corresponding to an icon in the sidebar may be opened. For example, refer to FIG. 9(a). Before the sidebar is widened, icons of four applications are included in the sidebar. After the sidebar is widened, as shown in FIG. 9(e), an interface of the application B is opened in the sidebar. For example, the interface obtained after the application B may be a home page of the application B, an interface opened last time, icons of some functions in the application B, or the like. For example, the application B is a Messaging application. The interface obtained after the application B is opened may include icons of some functions (for example, functions such as contacts, sent messages, and received messages) in Messaging. In this way, it can be convenient for the user to quickly enter a function in the Messaging application.

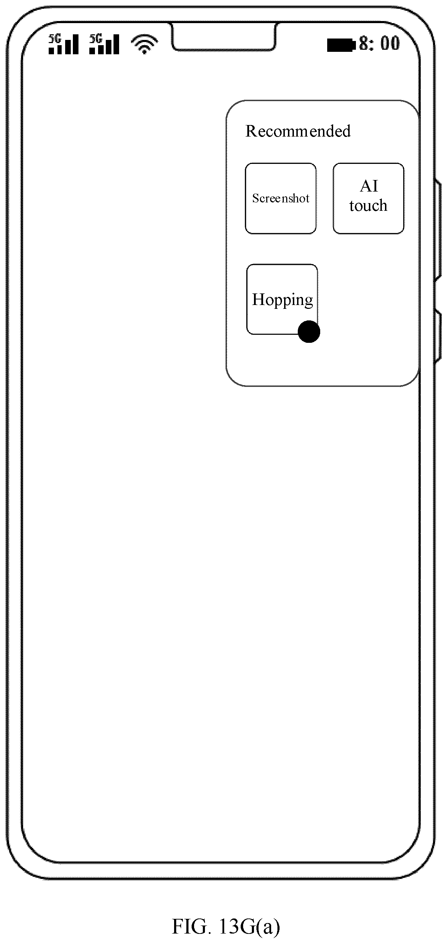

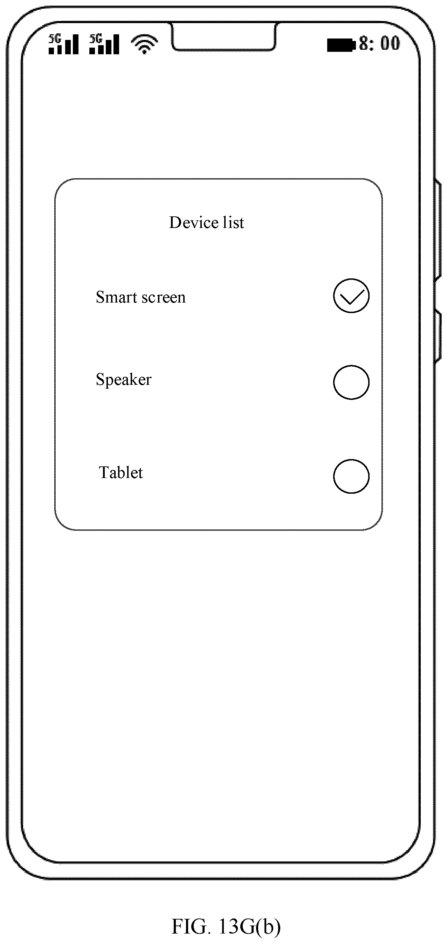

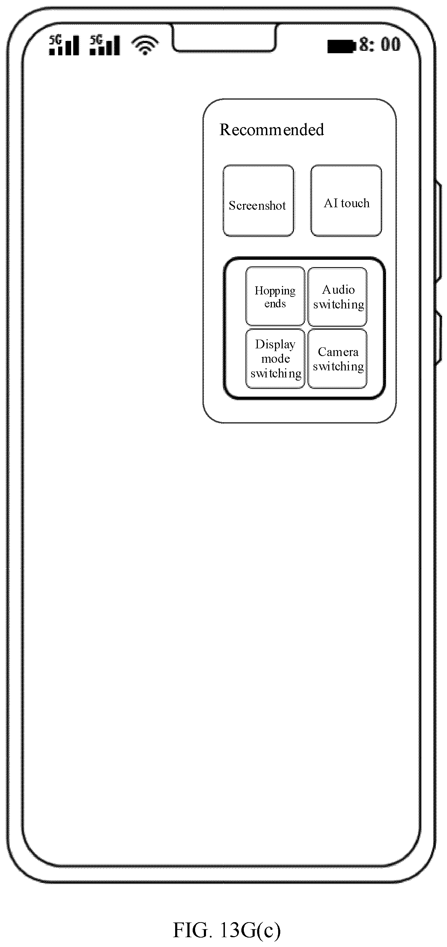

For another example, after the sidebar is widened, icons of different processing procedures of a function corresponding to an icon in the sidebar may be displayed. For example, refer to FIG. 9(a). Before the sidebar is widened, the sidebar includes icons of four functions. After the sidebar is widened, as shown in FIG. 9(f), icons of different processing procedures of a function B are displayed in the sidebar. It is assumed that the function B is a hopping function. Different processing procedures of the function B include hopping pausing, hopping ending, display mode switching, audio mode switching, camera switching, and the like. Therefore, after the sidebar is widened, the icons of hopping pausing, hopping ends, display mode switching, audio mode switching, camera switching, and the like are displayed. For this process, refer to FIG. 13G(a) to FIG. 13G(c) below.

It may be understood that, after the sidebar is widened, the sidebar may be further retracted to the original width. For example, (c) in FIG. 8B is used as an example. If the electronic device receives a swipe operation from the left edge of the sidebar or from the inner side of the display to the right edge of the display, the sidebar is retracted to the original width, namely, a width in (b) in FIG. 8B. When the electronic device receives the swipe operation from the left edge of the sidebar or from the inner side of the display to the right edge of the display again, the sidebar is hidden, that is, as shown in (a) in FIG. 8B. Hiding of the sidebar will be described below.

The foregoing embodiment describes a process of adjusting the width of the side frame. It may be understood that a height of the sidebar may also be adjusted, for example, the height is increased or decreased. For example, if the electronic device receives an operation of swiping upward from the lower edge of the sidebar by the user, the electronic device decreases the height of the sidebar. If the electronic device receives an operation of swiping downward from the lower edge of the sidebar by the user, the electronic device increases the height of the sidebar. When the height of the sidebar is decreased, some icons originally displayed in the sidebar may be hidden and not displayed. When the height of the sidebar is increased, an icon may be added to the sidebar or an application corresponding to an icon in the sidebar may be opened. A specific implementation process is described above. Details are not described again.

It may be understood that, after the sidebar appears, the sidebar may be further hidden. In some examples, the sidebar may be automatically hidden, or may be manually hidden.

For example, after the sidebar appears, if it is determined that no operation for any icon in the sidebar is received within the preset duration, the sidebar is automatically hidden. For another example, after the sidebar appears, if the electronic device receives an operation performed by the user on a current interface (an interface located at a lower layer of the sidebar) or a quantity of operations performed on a current interface is greater than the preset quantity of times, it indicates that the user does not intend to use the sidebar, and still wants to continue to execute a service on the current interface. In this case, the sidebar may be automatically hidden to avoid blocking the current interface.

For example, the sidebar is manually hidden. For example, the electronic device hides the sidebar when receiving an operation for hiding the sidebar. The operation for hiding the sidebar includes: a swipe operation from the inner side of the display to the right edge of the display, or a swipe operation from the left edge of the sidebar to the right edge of the display, or the like.

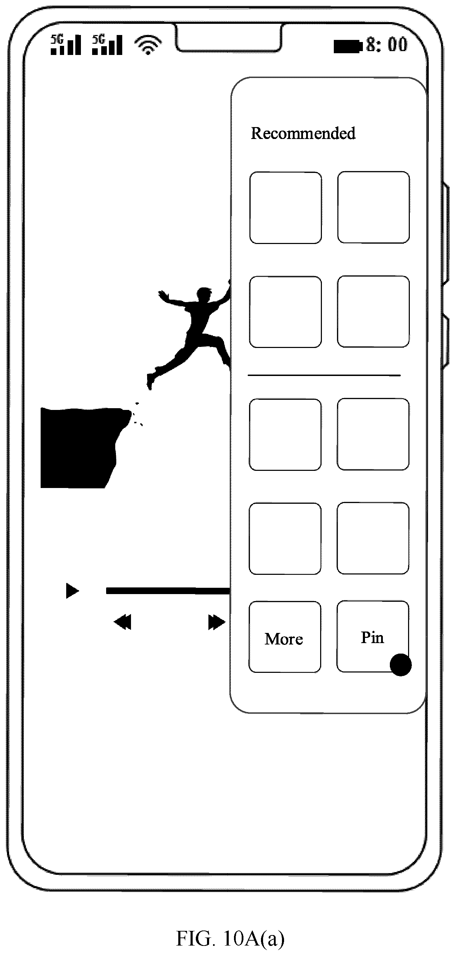

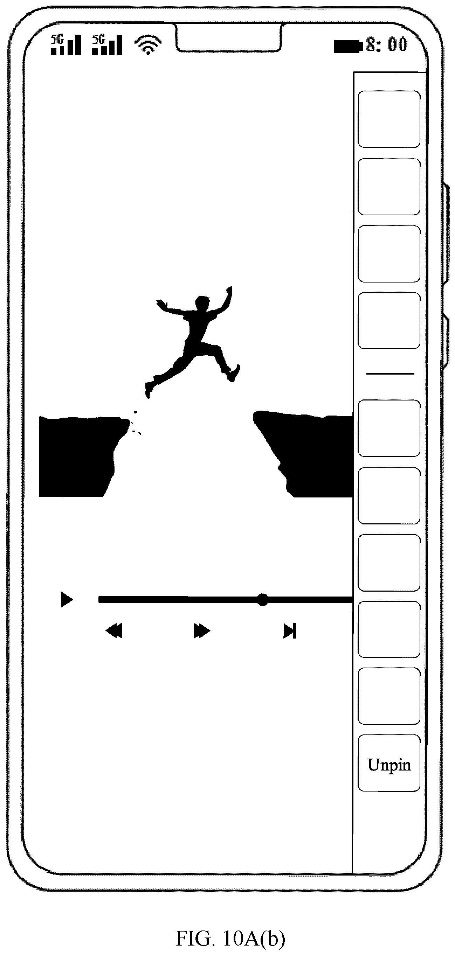

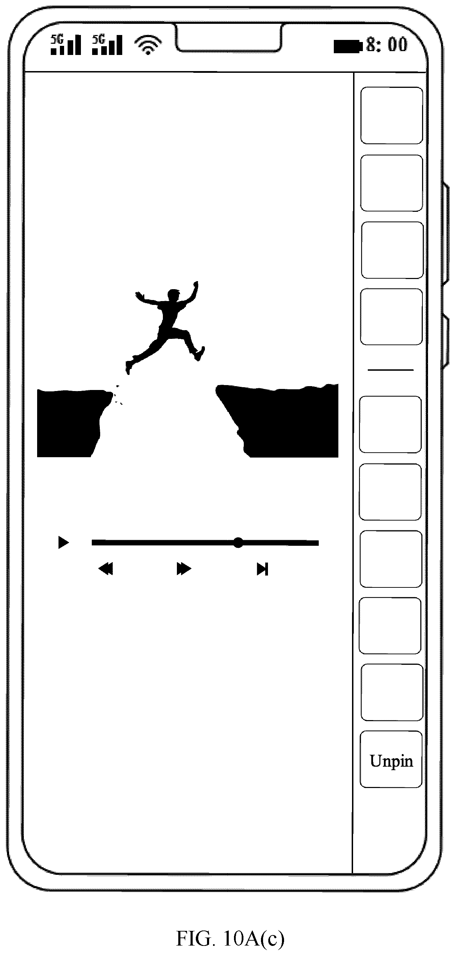

In some other examples, the sidebar may alternatively be pinned to the display, that is, always displayed on the display. Alternatively, after the sidebar appears, if an operation for indicating to pin the sidebar is received (for example, tapping a pin button on the sidebar in FIG. 10A(a)), the sidebar is pinned. For example, that the sidebar is pinned may be understood as that, when a display interface of the display changes, display of the sidebar is not canceled. For example, when an old application is switched to a new application in the foreground, the sidebar is not hidden. Alternatively, in some other embodiments, after the sidebar is pinned, the sidebar is hidden only when the electronic device displays the home screen in the foreground. When the electronic device displays an interface other than the home screen in the foreground, the sidebar is always displayed on the display.

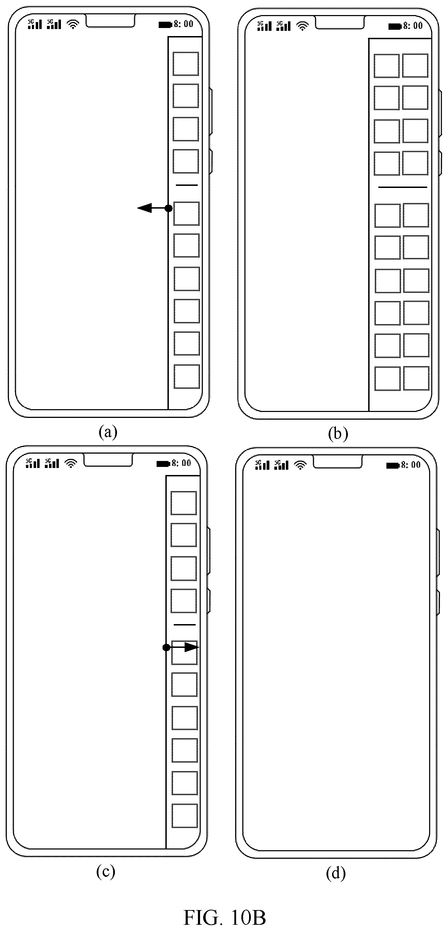

A display style of the sidebar that is pinned may be different from a display style of the sidebar that is not pinned. For example, refer to FIG. 10A(a). The electronic device displays an interface of the video playing application. When the sidebar is pinned (an operation for the pin button in the sidebar is received), as shown in FIG. 10A(b), the sidebar is displayed on an upper layer of the current interface in the floating manner, or as shown in FIG. 10A(c), the sidebar and the current interface (the video playing interface) are displayed in split screen. To facilitate a user operation, when the sidebar is pinned, the icon displayed in the sidebar can be slid upward or downward. For example, when a swipe-up operation of the user for the sidebar is received, more icons are displayed. In some examples, when the sidebar is pinned, the width of the sidebar may not be adjusted, or may be adjusted. For example, refer to (a) in FIG. 10B. When an operation of dragging the left edge of the sidebar leftward is received, the width of the sidebar is widened, as shown in (b) in FIG. 10B. Refer to (c) in FIG. 10B. When an operation of dragging the left edge of the sidebar rightward is received, the width of the sidebar is decreased. It may be understood that when the left edge of the sidebar is dragged out of the display, the sidebar may be hidden, as shown in (d) in FIG. 10B.

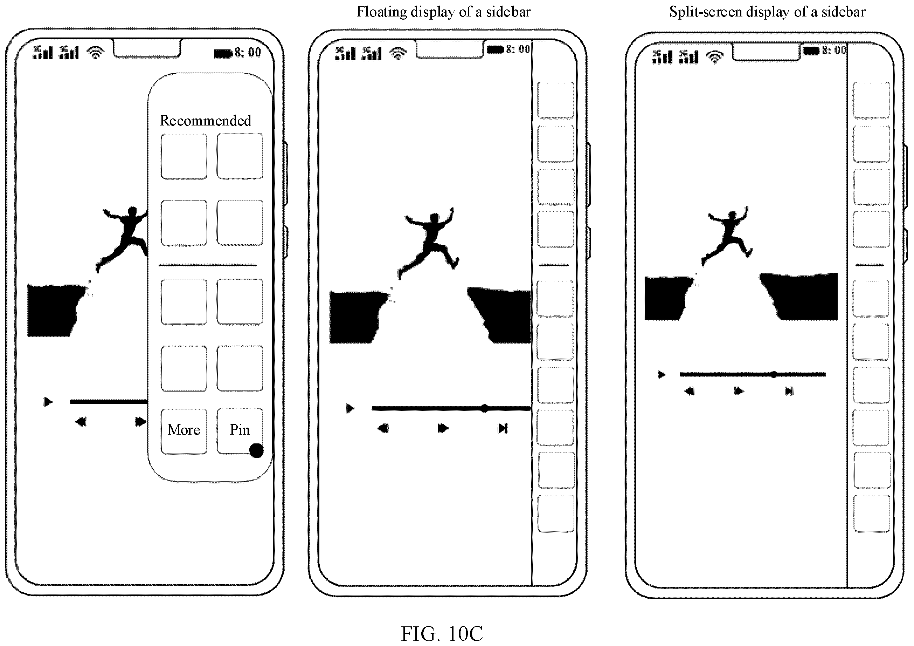

It should be noted that, in the examples in FIG. 10A(a) to FIG. 10A(c) and FIG. 10B, when the sidebar is pinned, a status bar (in which time information, operator information, battery level information, and the like are displayed) on the top of the display of the electronic device remains unchanged. In some other embodiments, when the sidebar is pinned, the status bar can also be adjusted adaptively. For example, refer to FIG. 10C. When the sidebar is pinned, a display size of the status bar is decreased, and the sidebar occupies a part of an original area of the status bar.

It may be understood that, after the sidebar is pinned, a pinned state may be further canceled. For example, FIG. 10A(b) is used as an example. When receiving an operation for canceling the pinned state, the electronic device cancels the pinned state, and restores to a sidebar state in FIG. 10A(a). For example, the operation for canceling the pinned state may include: a touch and hold operation at any location in the sidebar, or an operation of tapping an unpin button in the sidebar in FIG. 10A(b).

In the foregoing embodiment, the sidebar includes the recommended information, and the recommended information is determined in Manner 1 to Manner 4. In some other embodiments, the sidebar may further include other information. The other information may be, for example, information defined by the user, namely, the application, the service, the tool, the multi-application combination, and the like defined by the user.

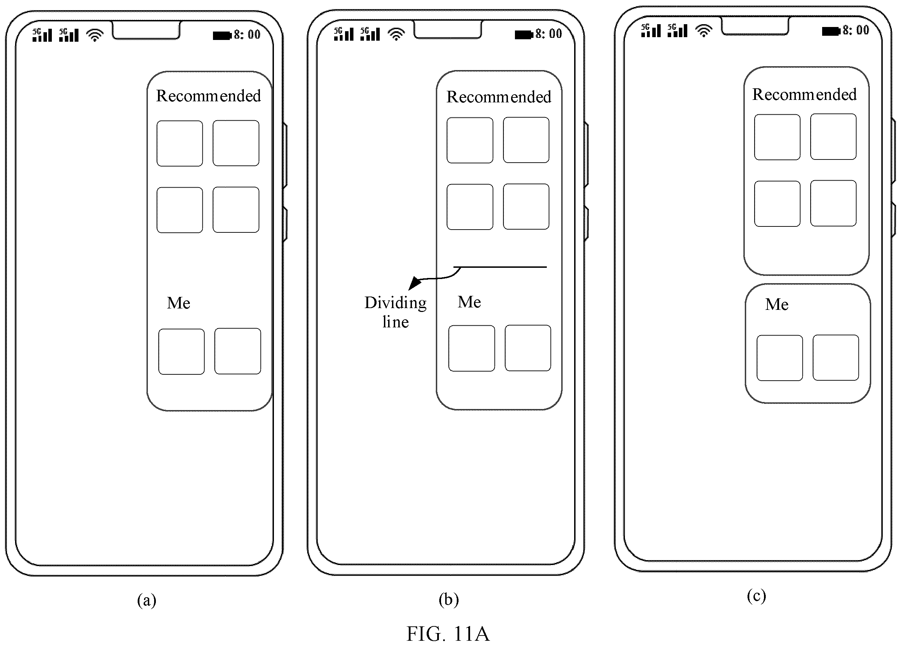

For example, refer to (a) in FIG. 11A. The sidebar includes two modules: "Recommended" and "Me" (that is, user-defined). The "Me" module includes the icons of the application, the service, the tool, the multi-application combination, and the like set by the user. For ease of distinguishing by the user, a dividing line may be provided between the "Recommended" module and the "Me" module, as shown in (b) in FIG. 11A. Alternatively, the two modules respectively occupy two widgets (namely, two display areas), for example, as shown in (c) in FIG. 11A. There is a gap between the two widgets.

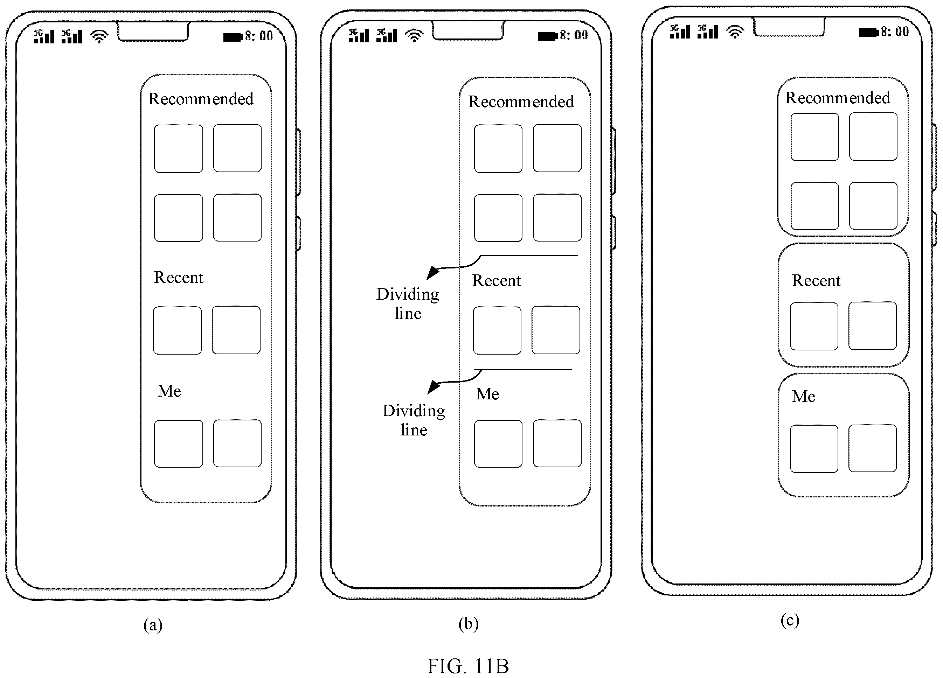

Certainly, the sidebar may further include more modules. For example, as shown in (a) in FIG. 11B, the sidebar includes three modules: "Recommended", "Me", and "Recent". The "Recent" module includes icons of an application, a service, a tool, a multi-application combination, and the like that are frequently used by the user recently (for example, in a recent week or a recent month). Alternatively, the three modules may be separated by dividing lines, as shown in (b) in FIG. 11B, or occupy different widgets, and there is a spacing between different widgets, as shown in (c) in FIG. 11B. In some other embodiments, in FIG. 11B, the "Recent" module may alternatively be replaced with "Shortcut", which includes shortcut icons for enabling various functions and the like, and may be set by the user, or may be set by the system by default.

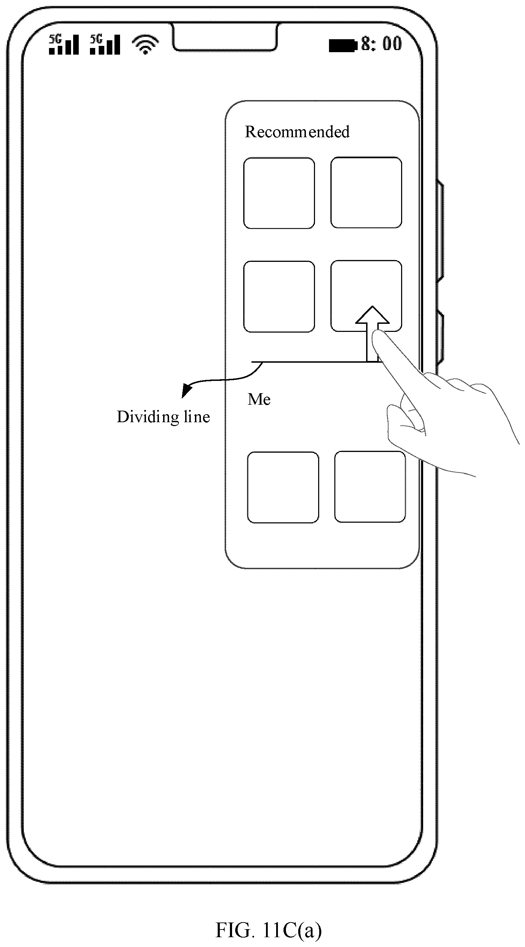

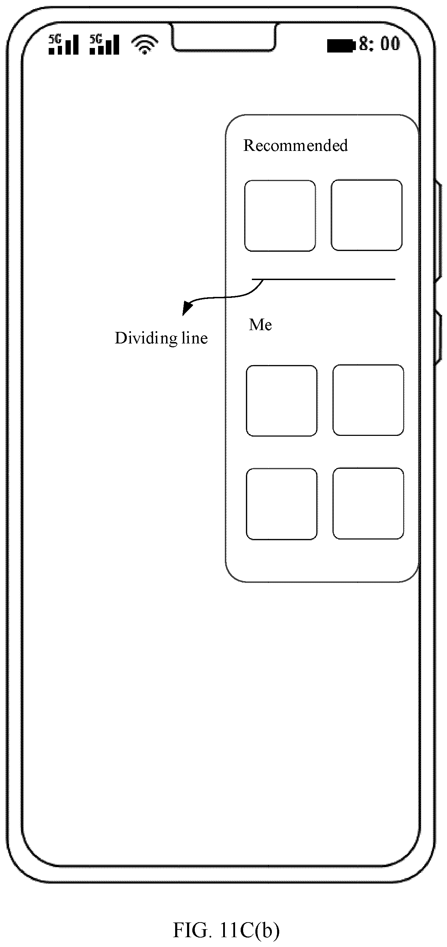

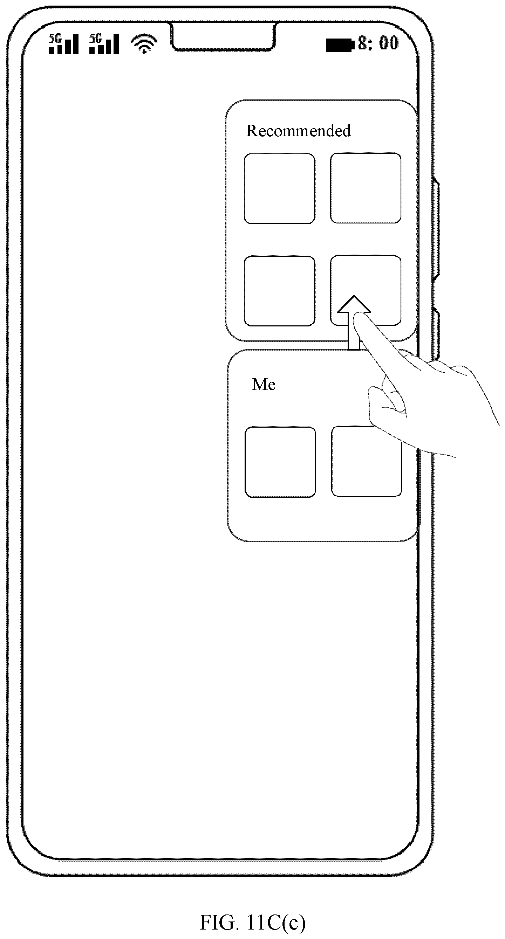

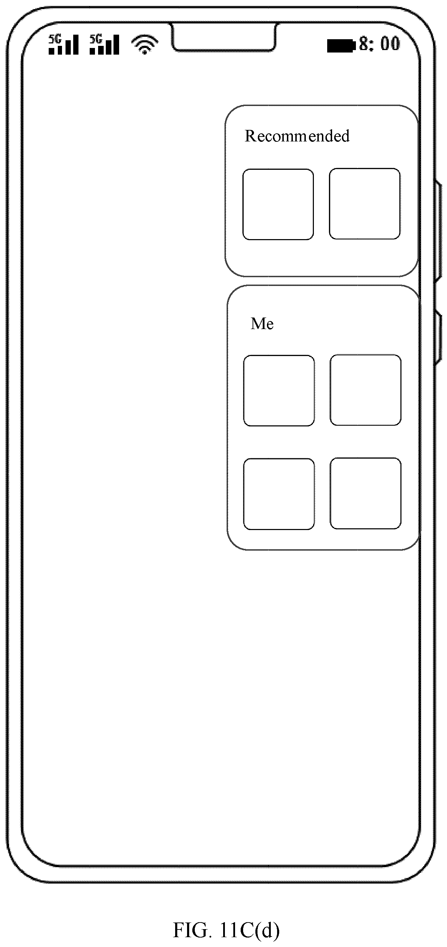

In some examples, when the sidebar includes a plurality of modules (for example, "Recommended" and "Me"), display sizes of different modules may be adjusted. For example, display sizes of different modules are adjusted by adjusting a location of a dividing line or a location of a spacing between different widgets. For example, refer to FIG. 11C(a) and FIG. 11C(b). When the dividing line moves upward, a display size of the "Recommended" module is decreased, and a display size of the "Me" module is increased. Similarly, it can be learned that when the dividing line moves downward, the display size of the "Recommended" module is increased, and the display size of the "Me" module is decreased (not shown in the figure). For another example, refer to FIG. 11C(c) and FIG. 11C(d). When the location of the spacing moves upward, a display size of the "Recommended" module is decreased, and a display area of the "Me" module is increased. Similarly, when the location of the spacing moves downward, the display size of the "Recommended" module is increased, and the display size of the "Me" module is decreased (not shown in the figure).

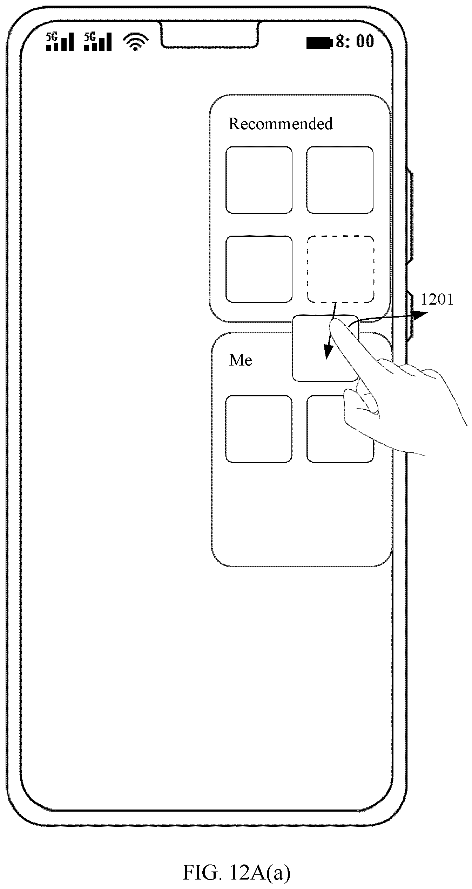

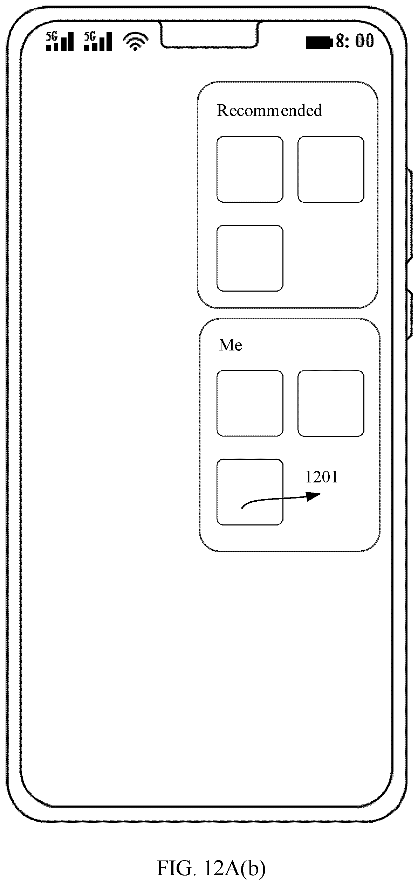

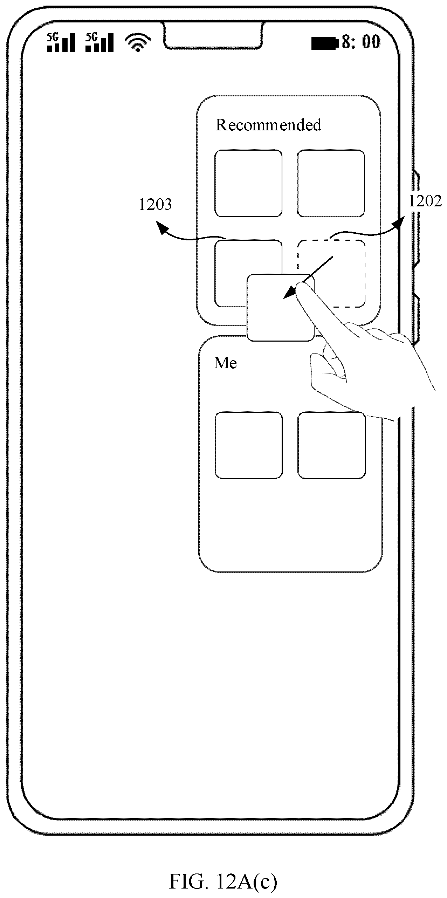

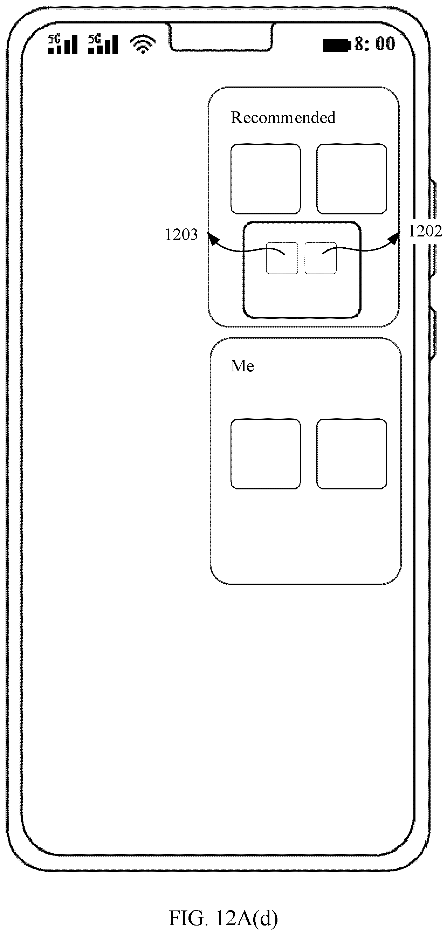

In some examples, when the sidebar includes a plurality of modules, icons in the sidebar may move across modules. For example, refer to FIG. 12A(a). When receiving an operation of moving an icon 1201 in the "Recommended" module downward to the "Me" module, the electronic device transfers the icon 1201 to the "Me" module, as shown in FIG. 12A(b). For example, when the icon 1201 is transferred to the "Me" module, the icon 1201 in the "Recommended" module may continue to be displayed, or may be canceled from being displayed.

In some other embodiments, different icons in the sidebar may be aggregated into a folder. For example, refer to FIG. 12A(c). The electronic device receives an operation of moving an icon 1202 toward an icon 1203. When a condition is met (for example, an overlapping area between the icon 1202 and the icon 1203 is greater than a preset area), a folder is formed through aggregates, as shown in FIG. 12A(d), and the folder includes the icon 1202 and the icon 1203. It may be understood that an area of the folder may be greater than an area of a single icon, or may be equal to an area of a single icon. This is not limited in embodiments of this application. When a folder exists in the sidebar, when the sidebar is widened (referring to the foregoing descriptions), a display size of the folder may be increased, to increase an area of an icon in the folder.

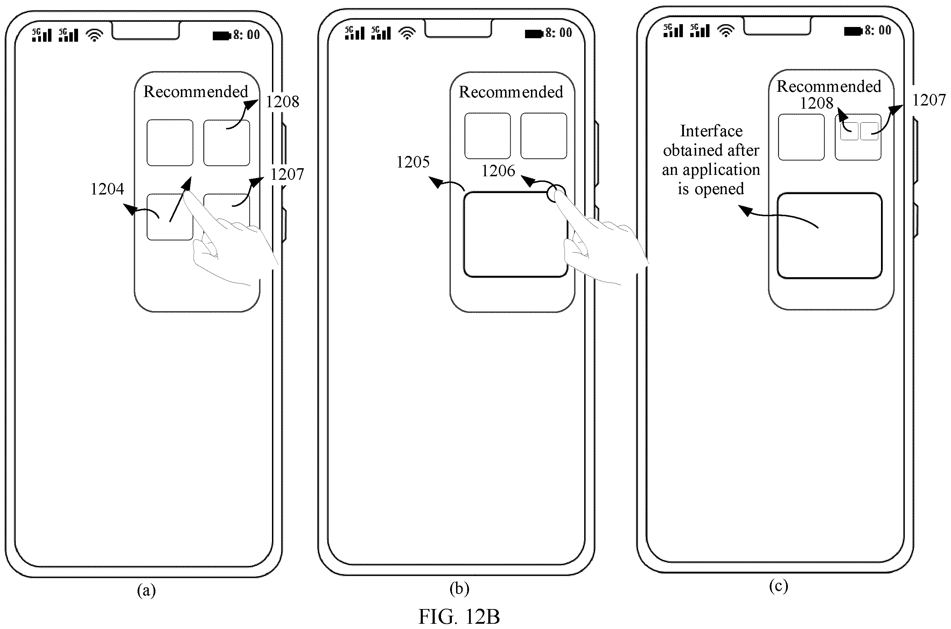

In some other embodiments, the electronic device may open, in the sidebar, an application corresponding to an icon. For example, refer to (a) in FIG. 12B. When the electronic device receives an operation of dragging an icon 1204 upward and staying for a period of time, a virtual box 1205 appears, and a mark 1206 is displayed at the upper right of the virtual box 1205, as shown in (b) in FIG. 12B. When an operation for the mark 1206 is received, an interface obtained after an application corresponding to the icon 1204 is opened is displayed in the virtual box 1205. The interface may be a home page of the application, an interface opened last time, an interface set by the user or the system, icons of some functions in the application, or the like. The Messaging application is used as an example. The interface obtained after the application is opened may include icons of some functions (for example, functions such as contacts, sent messages, and received messages) in Messaging. It may be understood that a display size of the virtual box 1205 covers an icon 1207, and the covered icon 1207 may be automatically aggregated with another icon into a folder. For example, as shown in (c) in FIG. 12B, the covered icon 1207 and an icon 1208 are aggregated into a folder.

It may be understood that, after the electronic device displays the sidebar, if an operation for an icon in the sidebar is received, an application corresponding to the icon may be opened in the foreground. Specifically, when the application is opened in the foreground, there is at least one of Manner A to Manner C.

Manner A: When receiving an operation for an icon in the sidebar, the electronic device opens, in full screen, an application corresponding to the icon.

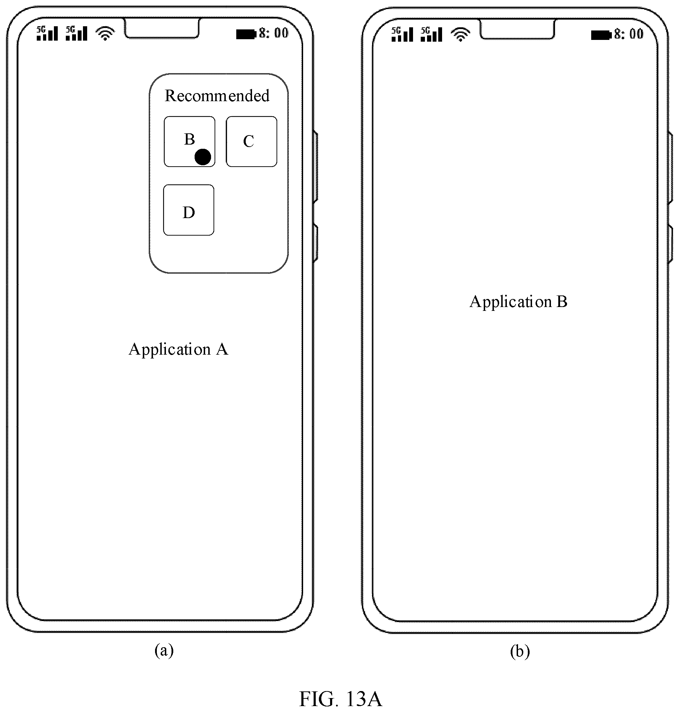

For example, refer to (a) in FIG. 13A. The electronic device displays the interface of the application A. The sidebar includes the icon of the application B. When receiving an operation (for example, a tap operation) for the icon of the application B in the sidebar, the electronic device displays the application A in full screen, as shown in (b) in FIG. 13A. In other words, a new application is opened by using the sidebar, and is displayed in full screen. In this way, an operation is convenient.

Manner B: When receiving an operation for an icon in the sidebar, the electronic device enters the split-screen mode.

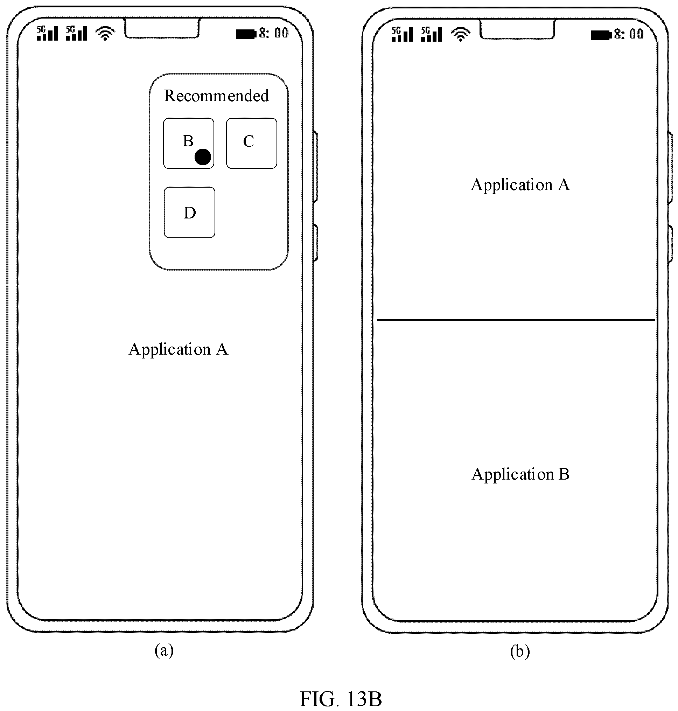

For example, refer to (a) in FIG. 13B. The electronic device displays the interface of the application A. The sidebar includes the icon of the application B. When receiving an operation for the icon of the application B in the sidebar, the electronic device enters the split-screen mode, as shown in (b) in FIG. 13B, to display the application A and the application B in split screen. After the electronic device enters the split-screen mode, the sidebar may be hidden or may not be hidden. In other words, the split-screen mode is quickly enabled through the sidebar, to implement a multi-window operation of the user.

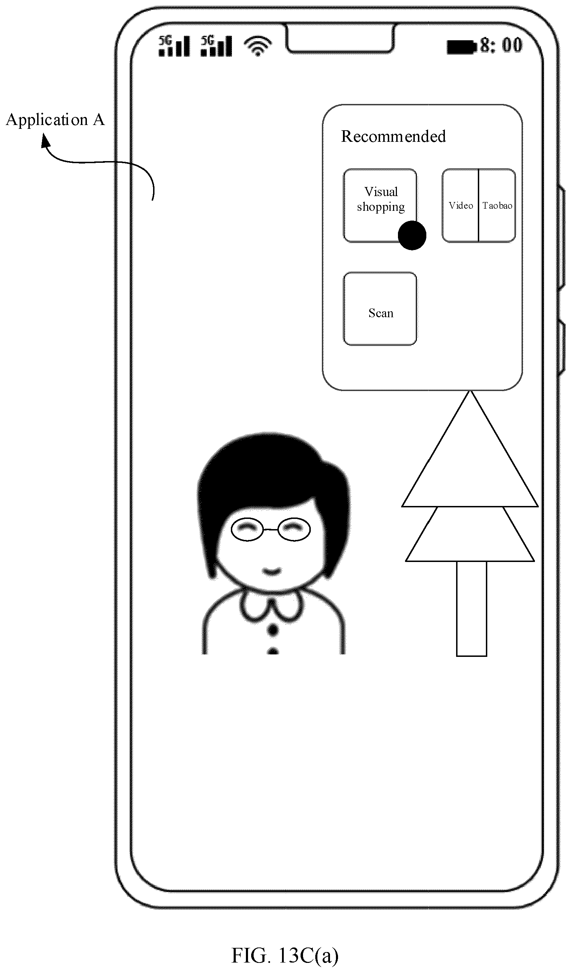

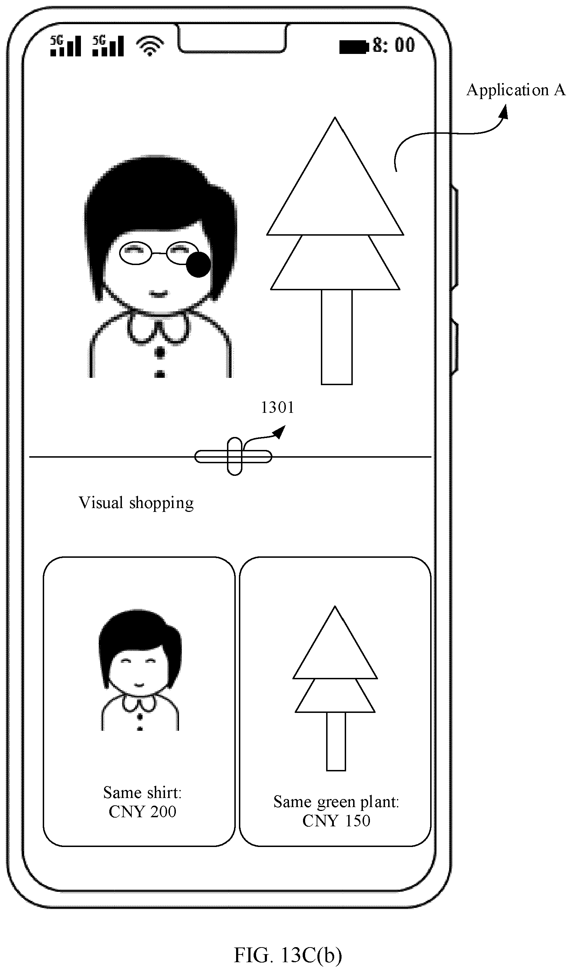

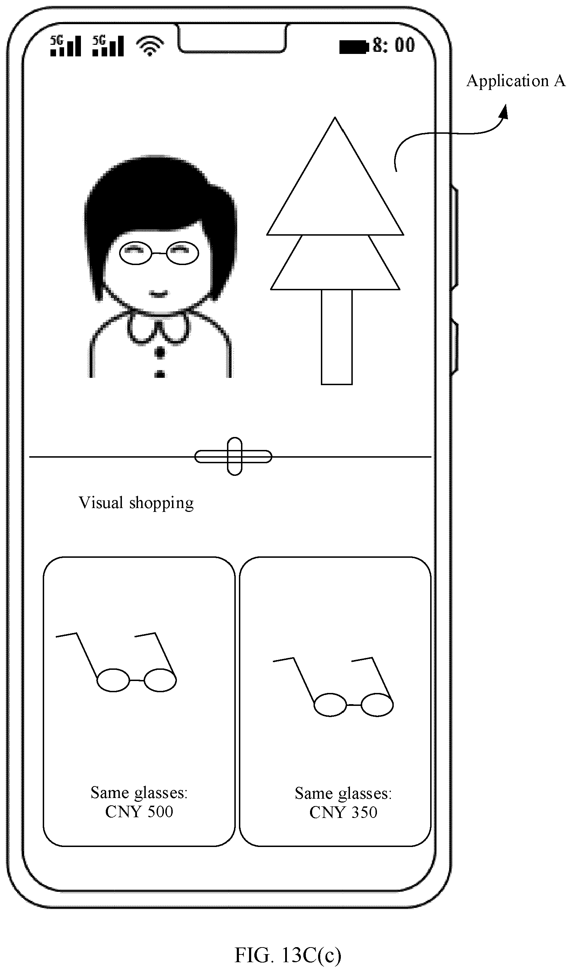

For example, refer to FIG. 13C(a). For example, the application A is a video playing application. A playing interface (including a person and a plant) of the video playing application is displayed in the foreground. The sidebar includes an icon for visual shopping (or referred to as HiTouch). When receiving an operation of tapping the icon of visual shopping in the sidebar by the user is received, the split-screen mode in FIG. 13C(b) is entered. In the split-screen mode, the video playing interface is displayed in an upper area, an interface of visual shopping is displayed in a lower area, and the interface of visual shopping includes a result of visual shopping performed on an object in the interface displayed in the upper area. For example, the interface displayed in the upper area includes objects, for example, a person and a plant. The interface in the lower area includes visual shopping results of these objects, for example, a price and a purchase link of person's clothing, and a price and a purchase link of the plant.

It should be understood that when the interface displayed in the upper area includes one object, the lower area may include a recognition result of visual shopping for the object. It may be understood that the interface displayed in the upper area may include a plurality of objects. In this case, the electronic device may separately perform visual shopping on a plurality of objects, and display a recognition result of each object in the lower area. Alternatively, the electronic device may determine a target object from a plurality of objects, perform visual shopping only on the target object, and display a recognition result of the target object in the lower area. There are a plurality of manners of determining the target object from the plurality of objects. For example, an object occupying a largest area in the plurality of objects is selected as the target object, or an object whose display location is centered is selected as the target object; or the target object may be selected by the user. For example, refer to FIG. 13C(b). After entering the split-screen mode, the electronic device displays a lock 1301 between two windows. The lock 1301 indicates that the two windows displayed in split screen have a dual-window linkage function. The dual-window linkage function may be understood as follows: When a user taps an object in a window in the upper area, a recognition result of visual shopping of the selected object is displayed in a window in the lower area. In other words, a recognition result in the lower window changes with an object tapped by the user in the upper window. As shown in FIG. 13C(b), when the user taps glasses of the person in the upper window, a recognition result of the glasses is displayed in the lower window, for example, a purchase link and a price of the glasses, as shown in FIG. 13C(c).

Manner C: When receiving an operation for an icon in the sidebar, the electronic device displays, in the floating manner, an application corresponding to the icon.

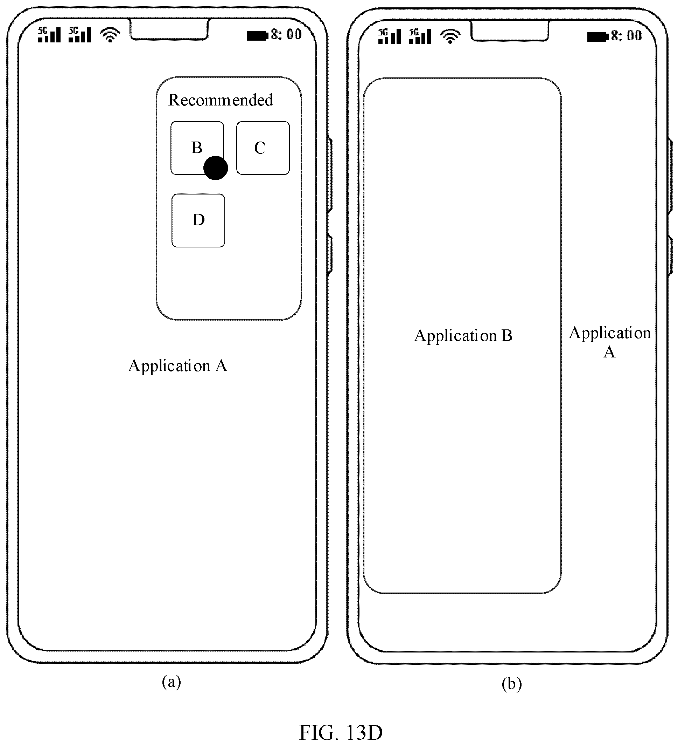

For example, refer to (a) in FIG. 13D. The electronic device displays the interface of the application A. The sidebar includes the icon of the application B. When receiving an operation for the icon of the application B in the sidebar, the electronic device displays a window of the application B in the floating manner, as shown in (b) in FIG. 13D. When the window of the application B appears in the floating manner, the sidebar may be hidden or may not be hidden.

Manner D: When receiving an operation for icon in the sidebar, the electronic device displays, in a semi-modal mode, an application corresponding to the icon.

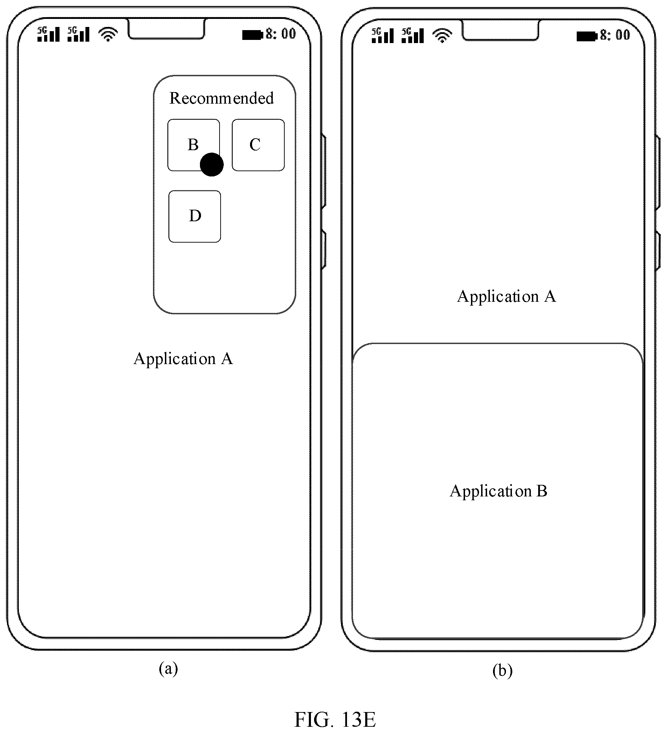

For example, refer to (a) in FIG. 13E. The electronic device displays the interface of the application A. The sidebar includes the icon of the application B. When receiving an operation for the icon of the application B in the sidebar, the electronic device displays a window of the application B in the semi-modal mode, as shown in (b) in FIG. 13E. The semi-modal mode may be understood as follows: The window of the application B is located at an upper layer of a window of the application A, but is not displayed in the floating manner, and may be fixedly displayed at a bottom location of the display.

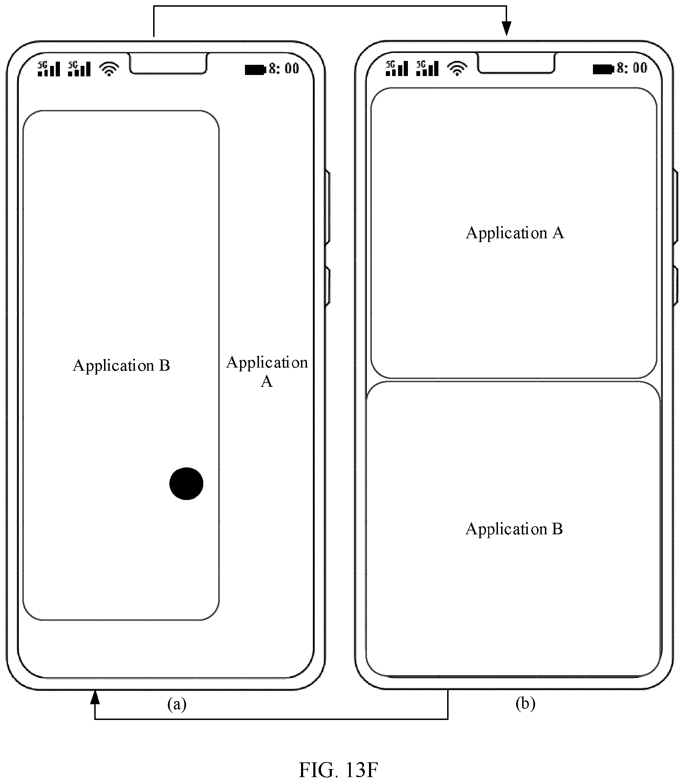

In some examples, any two or more of Manner B to Manner D may be used in combination. A combination of Manner B and Manner C is used as an example. As shown in (a) in FIG. 13F, after the electronic device displays the window of the application B in the floating manner, if an operation (for example, a touch, hold, and drag operation) for the window of the application B is received, the electronic device may switch from floating display to split-screen display, as shown in (b) in FIG. 13F. Certainly, after switching from a floating mode to the split-screen mode, the electronic device may further restore to the floating mode. For example, refer to (b) in FIG. 13F. When receiving an operation (for example, a touch, hold, and drag operation) for the application B, the electronic device restores to the floating display state in (a) in FIG. 13F. In other words, the split-screen mode and the floating mode may be switched. Certainly, the semi-modal mode and the split-screen mode or the floating mode may also be switched. In conclusion, switching may be performed between any two of the split-screen mode, the floating mode, and the semi-modal mode.

In some other embodiments, after the user taps an icon in the sidebar, options such as a processing procedure and mode switching of a function corresponding to the icon may be displayed in the sidebar. For example, refer to FIG. 13G(a). When receiving an operation of tapping the icon of the hopping function by the user, the electronic device displays a list shown in FIG. 13G(b). The list includes identifiers of other devices around the electronic device. It is assumed that the electronic device receives an operation of selecting a smart screen by the user, the electronic device establishes a connection to the smart screen, and hops files such as an audio file and a video file to the smart screen. After the electronic device establishes the connection to the smart screen, the sidebar is shown in FIG. 13G(c), includes an icon indicating a hopping progress, for example, a hopping ends icon or a hopping pausing icon, and may further include icons indicating mode switching, for example, an audio switching icon, a display mode switching icon, or a camera switching icon. Audio switching may be understood as that, sending an audio to a device 2 by a device 1 after the device 1 is connected to the device 2 is converted into sending an audio to the device 1 by the device 2. Display mode switching may be understood as that, sending a video to a device 2 by a device 1 after the device 1 is connected to the device 2 is converted into sending a video to the device 1 by the device 2. Camera switching may be understood as that, invoking a camera of a device 2 by a device 1 after the device 1 is connected to the device 2 is converted into invoking a camera of the device 1 by the device 2.

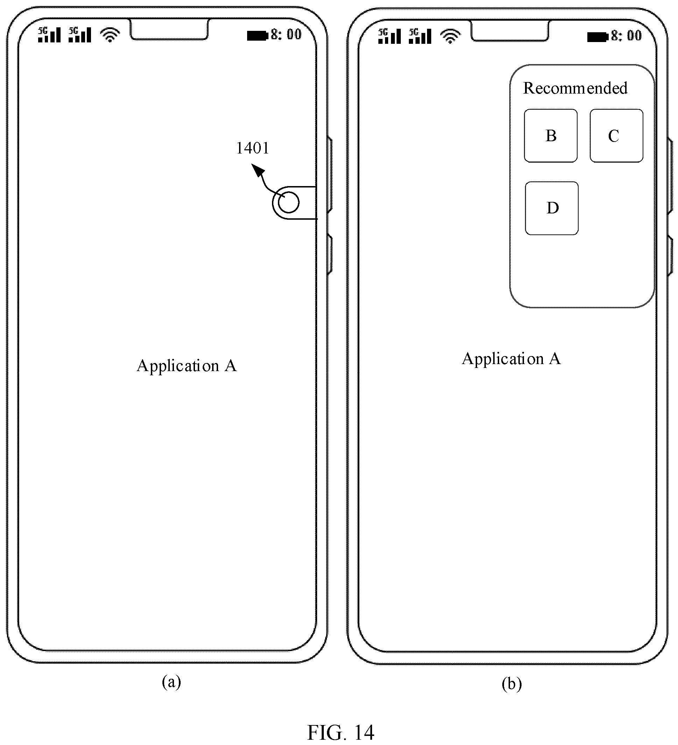

In the foregoing example, regardless of whether the sidebar automatically appears or appears when the user actively calls out, the electronic device directly displays the sidebar. In some other embodiments, the electronic device may further first display an icon, and then display the sidebar when receiving an operation for the application icon. For example, refer to (a) in FIG. 14. The electronic device first displays an icon 1401 automatically or through manual triggering of the user. When an operation (for example, a touch and hold operation or a double-tap operation) for the icon 1401 is received, the sidebar is called out, as shown in (b) in FIG. 14. In this manner, the icon appears on the electronic device first, and the user may know, through the icon, that there is recommended information. If the user wants to view the icon, the user may tap the icon. If the user does not want to view the icon, the user may not tap the icon. In this way, the icon slightly blocks the display, and user experience is not affected.

In some examples, in FIG. 14, the icon 1401 may be any icon, for example, may be a fixed icon (which may be set by the user or set by the system by default). Alternatively, the icon 1401 may be an icon of recommended information (an application, a service, a tool, or a multi-application combination) determined according to any one or more of Manner 1 or Manner 4. It may be understood that, as described above, there may be a plurality of pieces of recommended information determined according to any one or more of Manner 1 or Manner 4, and the recommended information corresponding to the icon 1401 may be recommended information with a highest confidence level in the plurality of pieces of recommended information. Manner 1 (determining the recommended information based on the current geographical location) is used as an example. It is assumed that the recommended information determined by the electronic device in Manner 1 includes the application A to the application C. If a confidence level of the application A is the highest (for example, the application A is used most frequently at the current geographical location), the icon 1401 is the icon of the application A. If the icon 1401 is the icon of the application A, when a first-type operation (for example, a tap operation) for the icon 1401 is received, the interface of the application A may be opened. The interface of the application may be displayed in full screen, or may be displayed in split screen with the interface of the application A, or displayed on an upper layer of an interface of the application A in the floating manner. If a second-type operation (for example, a touch and hold operation or a double-tap operation) for the icon 1401 is received, the sidebar may be displayed, as shown in (b) in FIG. 14. That is, when the icon 1401 appears on the display, different content may be opened by performing different operations on the icon. For example, an application interface corresponding to the icon may be opened in the foreground through the first-type operation (for example, a tap operation) for the icon, and the sidebar may be called out through the second-type operation (for example, a touch and hold operation or a double-tap operation) for the icon.

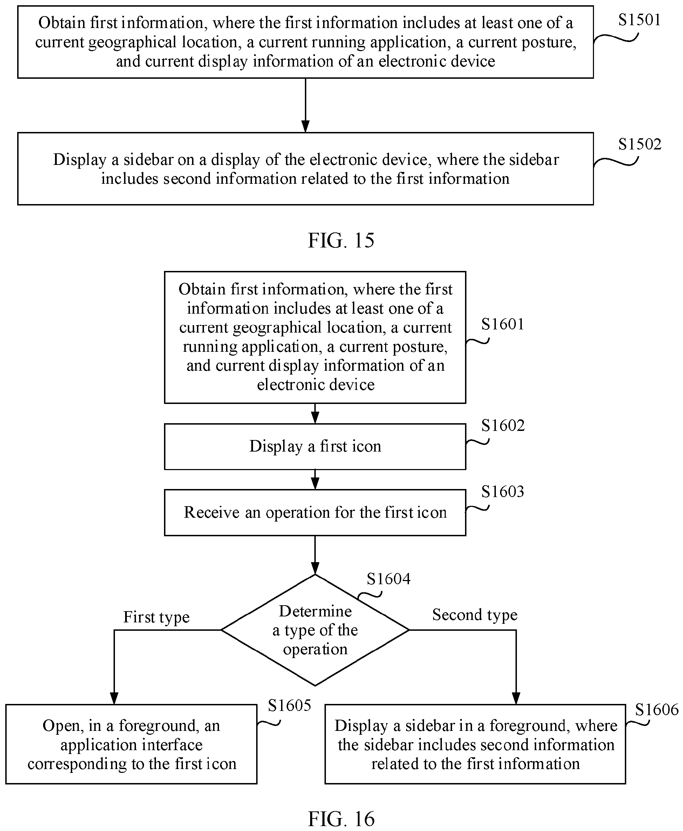

FIG. 15 is a schematic flowchart of an information recommendation method according to an embodiment of this application. The method may be performed by an electronic device, for example, a mobile phone or a tablet computer. Refer to the foregoing descriptions of the electronic device. As shown in FIG. 15, the procedure includes the following steps.

S1501: Obtain first information, where the first information includes at least one of a current geographical location, a current running application, a current posture, and current display information of the electronic device.

S1502: Display a sidebar on a display of the electronic device, where the sidebar includes second information related to the first information.

It may be understood that, before S1502, the method may further include a step: determining, based on the first information, the second information related to the first information, where the second information is information recommended to a user.

For example, if the first information includes the current geographical location, the second information includes: an icon of at least one of a function (an application, a service, a tool, a multi-application combination, or the like) that is used at the geographical location, a function that is used at a frequency greater than a preset frequency at the geographical location, a function that is commonly used at the geographical location, and a function that is set by a user or set by a system by default for use at the geographical location. For a specific implementation, refer to Manner 1.

For example, the first information includes the current running application. The second information is related to an application type of the current running application. In addition, in some examples, when there are a plurality of current running applications, the second information is related to an application type of a target application in the plurality of applications, and the target application is determined from the plurality of applications based on a priority relationship. The priority relationship includes: A priority of a foreground application is higher than a priority of a background application, or a priority of a full-screen application is higher than a priority of a non-full-screen application, and the priority of the non-full-screen application is higher than a priority of a background application. For a specific implementation process, refer to Manner 2.

For example, the first information includes the current posture, and the current posture is a support state. The second information includes at least one screen splitting icon. The screen splitting icon indicates two applications to be displayed in split screen, and a screen splitting manner indicated by the screen splitting icon is related to a folding direction of the electronic device. For example, when the folding manner is up-down folding, the screen splitting icon indicates up-down screen splitting of the two applications. When the folding direction is a left-right folding direction, the screen splitting icon indicates left-right screen splitting of the two applications. For a specific implementation, refer to Manner 3.

For example, the first information includes the current display information. The second information is related to content and/or a layout status of the current display information. That the second information is related to a layout status of the current display information includes: When the layout status is a to-be-split-screen state in which screen splitting is to be performed with a third application, the second information includes at least one screen splitting icon, and the screen splitting icon indicates another application and the third application to be displayed in split screen; or when the layout status is a split-screen state in which screen splitting is performed on a fourth application and a fifth application, the second information includes at least one screen splitting icon, and the screen splitting icon indicates another application and the fourth application to be displayed in split screen, and/or another application and the fifth application to be displayed in split screen. For a specific implementation, refer to Manner 4.

In some examples, before S1502, the method may further include: displaying a first interface; and when the electronic device displays the side screen, displaying the side screen on an upper layer of the first interface in a floating manner, or displaying the side screen and the first interface in split screen.

In some examples, the sidebar may be manually called out or automatically appear. Refer to the foregoing descriptions (for example, FIG. 8A or FIG. 8B). Certainly, after the sidebar is called out, the sidebar may be further hidden. For details, refer to the foregoing descriptions.

In some examples, a width of the sidebar may be adjusted. For example, the electronic device receives a first swipe operation from a side edge of the display to an inner side of the display, to call out a first sidebar, where a width of the first sidebar is a first width; and receives an operation for widening the first sidebar, and adjusts the first sidebar to be a second sidebar, where a width of the second sidebar is a second width, and the second width is greater than the first width. The operation for widening the first sidebar includes: a second swipe operation from the side edge of the display to the inner side of the display or a swipe operation from a side edge of the first sidebar to the inner side of the display. For a specific widening process, refer to the foregoing descriptions (for example, FIG. 9(a) to FIG. 9(f)). When the sidebar is widened, a sorting manner of icons in the sidebar may be adjusted, as shown in FIG. 9(b), or a quantity of icons in the first sidebar is increased, as shown in FIG. 9(d), or a first display area is added to the first sidebar, and an interface obtained after a sixth application in the first sidebar is opened is displayed in the first display area, as shown in FIG. 9(d), or a second display area is added to the first sidebar, and icons of different processing procedures of a function in the first sidebar are displayed in the second display area, as shown in FIG. 9(f).

In some examples, the sidebar includes the first display area and the second display area, the first display area includes the second information, and the second display area includes user-defined information. For details, refer to the foregoing descriptions (for example, FIG. 11A and FIG. 11B). Display sizes of the first display area and the second display area may be adjusted, as shown in FIG. 11C(a) to FIG. 11C(d).

In some examples, after the electronic device displays the sidebar, an icon (for example, a second icon) may be tapped in the sidebar, and an application interface corresponding to the icon is opened in a foreground. For example, in the foreground, the application interface corresponding to the icon may be displayed in full screen; or a split-screen mode is entered, where in the split-screen mode, a first area and a second area are included, a current interface is displayed in the first area, and the application interface corresponding to the icon is displayed in the second area; or the application interface corresponding to the icon is displayed at an upper layer of the current interface in a floating manner. For a specific implementation process, refer to the foregoing descriptions (for example, FIG. 13D to FIG. 13F).

FIG. 16 is another schematic flowchart of an information recommendation method according to an embodiment of this application. As shown in FIG. 16, the procedure includes the following steps.

S1601: Obtain first information, where the first information includes at least one of a current geographical location, a current running application, a current posture, and a current display interface of the electronic device.

S1602: Display a first icon.

For example, the first icon may be any icon, for example, may be a fixed icon (which may be set by a user or may be set by a system by default), or may be an icon of a function that is most frequently used by the user and that is determined by the electronic device based on at least one of the current geographical location, the current running application, the current posture, and current display information. For details, refer to the descriptions in FIG. 14.

S1603: Receive an operation for the first icon.

S1604: Determine an operation type for the first icon; and if the operation is a first-type operation, perform S 1605, or if the operation is a second-type operation, perform S1606.

For example, the first-type operation is a tap operation, the second-type operation is a double-tap operation or a touch and hold operation, and the like. In conclusion, the first-type operation and the second-type operation are different types of operations. This is not specifically limited in embodiments of this application.

S1605: If the operation type is a first type, open, in a foreground, an application interface corresponding to the first icon.

For example, the first-type operation may be a tap operation for the first icon, that is, when the electronic device receives the tap operation for the first icon, the application interface corresponding to the first icon may be opened in the foreground. For example, in the foreground, the application interface corresponding to the first icon may be opened in full screen, or the split-screen mode is entered, and a current interface (an interface displayed before the application interface corresponding to the first icon is opened) and the application interface that corresponds to the first icon are displayed in split screen, or the interface corresponding to the first icon may be further displayed at an upper layer of the current interface in a floating manner.

S 1606: Display a sidebar in the foreground if the operation type is a second type, where the sidebar includes second information related to the first information.

For example, the second-type operation may be a touch and hold operation, a double-tap operation, or the like for the first icon. In other words, when receiving the touch and hold operation or the double-tap operation for the first icon, the electronic device may call out the sidebar.

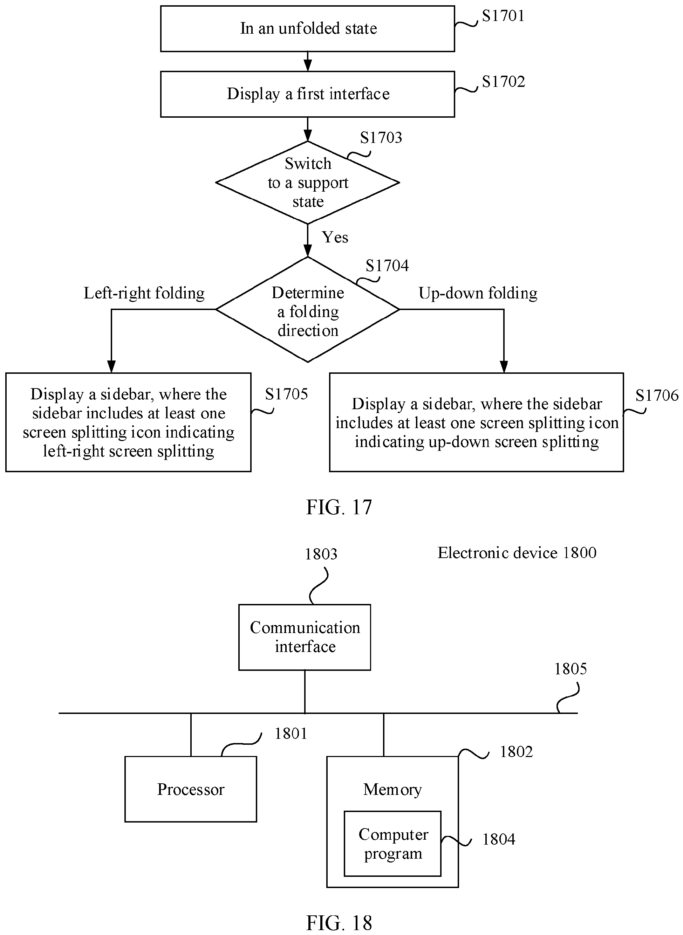

FIG. 17 is another schematic flowchart of an information recommendation method according to an embodiment of this application. The procedure includes the following steps.

S1701: An electronic device is in an unfolded state.

S1702: The electronic device displays a first interface.

S1703: The electronic device determines whether to switch to a support state, and if yes, performs S1704.

For descriptions of the unfolded state and the support state, refer to the foregoing descriptions. Details are not described herein again.

S 1704: The electronic device determines a folding direction; and if the folding direction is a left-right folding direction, performs S1705, or if the folding direction is an up-down folding direction, performs S1706.

The folding direction includes left-right folding, up-down folding, and certainly may further be another folding direction, for example, diagonal folding. This specification uses left-right folding and up-down folding as examples.

S1705: Display a sidebar if the folding direction is a left-right folding direction, where the side screen includes at least one screen splitting icon, and the screen splitting icon indicates left-right screen splitting of two applications.

S1706: Display a sidebar if the folding direction is up-down folding, where the side screen includes at least one screen splitting icon, and the screen splitting icon indicates up-down screen splitting of two applications.

For FIG. 17, refer to the foregoing related descriptions of FIG. 6. For brevity, details are not described herein again.

FIG. 18 is a diagram of a structure of an electronic device 1800 according to an embodiment of this application. The electronic device 1800 may be the foregoing mobile phone, tablet computer, or the like. As shown in FIG. 18, the electronic device 1800 may include one or more processors 1801, one or more memories 1802, a communication interface 1803, and one or more computer programs 1804. The foregoing components may be connected through one or more communication buses 1805. The one or more computer programs 1804 are stored in the memory 1802 and are configured to be executed by the one or more processors 1801, and the one or more computer programs 1804 include instructions. For example, when the electronic device 1800 is the foregoing electronic device, the instructions may be used to perform related steps of the electronic device in the foregoing corresponding embodiments, for example, the steps in the embodiments shown in any one of FIG. 15 to FIG. 17. The communication interface 1803 is configured to implement communication between the electronic device 1800 and another device. For example, the communication interface may be a transceiver.

In the foregoing embodiments provided in this application, the method provided in embodiments of this application is described from the perspective in which the electronic device (for example, the mobile phone or the tablet computer) is used as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment, instead, the statements mean "one or more but not all of embodiments", unless otherwise specifically emphasized in another manner. The terms "include", "contain", "have", and their variants all mean "include but are not limited to", unless otherwise specifically emphasized.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like. In a case in which no conflict occurs, the solutions in the foregoing embodiments may be combined for use.

It should be noted that a part of this patent application document includes content protected by copyright. Except for making copies of patent documents of the Patent Office or recorded content of patent documents, the copyright owner reserves the copyright.

## Claims

1. An information recommendation method, applied to an electronic device, and comprising:
obtaining first information, wherein the first information comprises at least one of a current geographical location, a current running application, a current posture, and current display information of the electronic device; and
displaying a sidebar on a display of the electronic device, wherein the sidebar comprises second information related to the first information.

2. The method according to claim 1, wherein when the first information comprises the current geographical location, the second information comprises: an icon of at least one of a function that is used at the geographical location, a function that is used at a frequency greater than a preset frequency at the geographical location, a function that is commonly used at the geographical location, and a function that is set by a user or set by a system by default for use at the geographical location.

3. The method according to claim 1, wherein when the first information comprises the current running application, the second information is related to an application type of the current running application.

4. The method according to claim 1 or 3, wherein the method further comprises:
when there are a plurality of current running applications, the second information is related to an application type of a target application in the plurality of applications, and the target application is determined from the plurality of applications based on a priority relationship, wherein the priority relationship comprises: a priority of a foreground application is higher than a priority of a background application, or a priority of a full-screen application is higher than a priority of a non-full-screen application and the priority of the non-full-screen application is higher than a priority of a background application.

5. The method according to claim 1, wherein the first information comprises the current posture, and when the current posture is a support state, the second information comprises at least one screen splitting icon, wherein the screen splitting icon indicates two applications to be displayed in split screen, and a screen splitting manner indicated by the screen splitting icon is related to a folding direction of the electronic device, wherein
the support state is a state of the electronic device between a folded state and an unfolded state.

6. The method according to claim 5, wherein that a screen splitting manner indicated by the screen splitting icon is related to a folding direction of the electronic device comprises:
when the folding manner is up-down folding, the screen splitting icon indicates up-down screen splitting of two applications; and
when the folding direction is a left-right folding direction, the screen splitting icon indicates left-right screen splitting of two applications.

7. The method according to claim 5, wherein the screen splitting icon indicates a first application and a second application to be displayed in split screen, the first application is an application displayed in a foreground when the electronic device is in the unfolded state, and the second application is another application different from the first application; and
the another application comprises at least one of an application that is frequently used by a user with the first application in split screen, an application that is set by the user for use with the first application in split screen, an application that is set by a system by default for use with the first application in split screen, and an application that is switched with the first application a quantity of times greater than a preset quantity of times.

8. The method according to claim 1, wherein when the first information comprises the current display information, the second information is related to content and/or a layout status of the current display information.

9. The method according to claim 8, wherein that the second information is related to a layout status of the current display information comprises:
when the layout status is a to-be-split-screen state in which screen splitting is to be performed with a third application, the second information comprises at least one screen splitting icon, and the screen splitting icon indicates another application and the third application to be displayed in split screen; or
when the layout status is a split-screen state in which screen splitting is performed on a fourth application and a fifth application, the second information comprises at least one screen splitting icon, and the screen splitting icon indicates another application and the fourth application to be displayed in split screen, and/or another application and the fifth application to be displayed in split screen.

10. The method according to claim 1, wherein the sidebar comprises at least one of the following:
an icon of an application, an icon of a service, an icon of a tool, a screen splitting icon, a floating and full-screen display icon, and a floating and split-screen display icon.

11. The method according to claim 1, wherein before the obtaining first information, the method further comprises: displaying a first interface, wherein the sidebar is displayed on an upper layer of the first interface in a floating manner, or is displayed with the first interface in split screen.

12. The method according to claim 1, wherein before the displaying a sidebar on a display of the electronic device, the method further comprises:
receiving a swipe operation from a side edge of the display to an inner side of the display to call out the sidebar; or
displaying a first icon, and displaying the sidebar when an operation for the first icon is received.

13. The method according to claim 11, wherein the receiving a swipe operation from a side edge of the display to an inner side of the display to call out the sidebar comprises:
receiving a first swipe operation from the side edge of the display to the inner side of the display to call out a first sidebar, wherein a width of the first sidebar is a first width; and
receiving an operation for widening the first sidebar, and adjusting the first sidebar as a second sidebar, wherein a width of the second sidebar is a second width, and the second width is greater than the first width, wherein
the operation for widening the first sidebar comprises: a second swipe operation from the side edge of the display to the inner side of the display or a swipe operation from a side edge of the first sidebar to the inner side of the display.

14. The method according to claim 12, wherein the adjusting the first sidebar as a second sidebar comprises: performing at least one of the following steps to obtain the second sidebar:
adjusting a sorting manner of icons in the first sidebar; increasing a quantity of icons in the first sidebar; adding a first display area to the first sidebar, and displaying, in the first display area, an interface obtained after a sixth application in the first sidebar is opened; and adding a second display area to the first sidebar, and displaying icons of different processing procedures of a function in the first sidebar in the second display area.

15. The method according to claim 11, wherein the first icon is an icon of a function that is most frequently used by a user and that is determined by the electronic device based on at least one of the current geographical location, the current running application, the current posture, and the current display information.

16. The method according to claim 1, wherein the sidebar comprises at least one icon, and the method further comprises:
when an operation for a second icon in the sidebar is received, performing at least one of the following steps:
displaying, in full screen, an application interface corresponding to the second icon;
entering a split-screen mode, wherein in the split-screen mode, a first area and a second area are comprised, a current interface is displayed in the first area, and the application interface corresponding to the second icon is displayed in the second area; and
displaying, on an upper layer of the current interface in a floating manner, the application interface corresponding to the second icon.

17. The method according to claim 15, wherein when the second icon is an icon of Al touch, after the entering a split-screen mode, the method further comprises:
receiving a selection operation of selecting a target object in the first area; and
displaying a recognition result of the target object in the second area in response to the selection operation.

18. The method according to claim 1, wherein the sidebar comprises a first display area and a second display area, the first display area comprises the second information, and the second display area comprises user-defined information.

19. The method according to claim 17, wherein the first display area and the second display area are separated by a dividing line or a spacing, and the method further comprises:
receiving an adjustment operation for the dividing line or the spacing; and
adjusting display sizes of the first display area and the second display area in response to the adjustment operation.

20. An electronic device, comprising:
a processor, a memory, and one or more programs, wherein
the one or more programs are stored in the memory, the one or more programs comprise instructions, and when the instructions are executed by the processor, the electronic device is enabled to perform steps of the method according to any one of claims 1 to 19.

21. A computer-readable storage medium, wherein the computer-readable storage medium is configured to store a computer program, and when the computer program is run on a computer, the computer is enabled to perform the method according to any one of claims 1 to 19.
